# EUROPEAN PATENT APPLICATION

(11) **EP 4 435 655 A1**
(43) Date of publication of application: **25.09.2024**
(21) Application number: 24156614.0
(22) Date of filing: 08.02.2024
(51) Int. Cl.: G06F 21/62, G06N 3/098, G06N 20/00

(54) **DATA MANAGEMENT SYSTEM AND DATA MANAGEMENT METHOD**

(30) Priority: 23.03.2023 JP 2023046182
(71) Applicant: Hitachi, Ltd., Tokyo 100-8280 (JP)
(72) Inventor: ISODA, Yuya, Tokyo, 1008280 (JP); TARUMI, Shinji, Tokyo, 1008280 (JP)
(74) Representative: Mewburn Ellis LLP

(57) **Abstract**

For each entity, an access policy is provided including an access authority for each n-th order data for use in an application or a model. For each operation, provided are an operation log, and a data log that is a log of data of a source or a target of the operation and is associated with the operation log. Provided is an entity list based on an access policy for an operation log and/or a data log. In response to a request, when one or more entity lists in which an entity specified on the basis of the request is recorded are found from a plurality of entity lists, the processor specifies a usage condition on the basis of one or more operation logs and one or more data logs specified using the one or more entity lists, and returns data indicating the specified usage condition to a request source.

## Description

### BACKGROUND OF THE INVENTION

### 1. Field of the Invention

The present invention relates generally to data management.

### 2. Description of the Related Art

As an example of data to be managed, there is privacy data such as patient medical data. In order to provide personalized medical care, patient characteristics need to be segmented to a fine granularity, and a large amount of privacy data is required. Federated learning is known as model learning using privacy data.

US 10,796,782 discloses a technique related to privacy enhancement. US 2021/0406782 discloses a technique related to federated learning. JP 6782802 discloses a technique related to machine learning.

### SUMMARY OF THE INVENTION

With the arrival of data distribution society, a data provider may suffer an unexpected disadvantage due to usage of secondary and tertiary data. Although it is possible to request stop of usage, deletion, or disclosure of privacy data by opt-out application, it is difficult to perform appropriate opt-out application unless how the privacy data is used is known. In addition, if a usage history is obscure (difficult to trace), there is a risk that the number of data providers decreases to make provision of personalized medical care difficult.

For these reasons, management of privacy data is required also in federated learning, and provision of transparent federated learning service is desired. In addition, such a problem may also occur in data management other than in the federated learning.

US 10,796,782, US 2021/0406782 and JP 6782802 neither discloses nor suggests such a problem and means for solving such a problem.

A storage apparatus stores an access policy for each entity. For each entity, the access policy includes, with respect to each of one or a plurality of operation attributes, an access authority for each n-th order data for use in an application or a model with respect to the entity (n represents two or more integers among integers of n ≥ 0). The storage apparatus stores, for each operation, an operation log that is a log of the operation, a data log that is a data log corresponding to source data as data for the operation and is associated with the operation log, and/or a data log that is a data log corresponding to target data as data as a result of the operation and is associated with the operation log. The storage apparatus stores an entity list based on the access policy with respect to an operation log and/or a data log. Each entity list includes an inclusion list that is a list of entities permitted to use data for operation or data corresponding to a log associated with the entity list, and/or an exclusion list that is a list of entities prohibited to use data for operation or data corresponding to a log associated with the entity list. In response to a request, when one or more entity lists in which an entity specified on the basis of the request is recorded are found from a plurality of entity lists, the processor specifies a usage condition on the basis of one or more operation logs and one or more data logs specified using the one or more entity lists, and returns data indicating the specified usage condition to a request source.

According to the present invention, it is possible to provide transparent data management while maintaining a data access authority.

### BRIEF DESCRIPTION OF THE DRAWINGS

Fig. 1 illustrates a configuration of an entire system according to an embodiment of the present invention;
Fig. 2 illustrates a configuration of a client server system as a data management system;
Fig. 3 schematically illustrates a flow of processing up to feature storage in a client computer;
Fig. 4 schematically illustrates a flow of processing related to learning in the client computer and federated learning in a server computer;
Fig. 5 illustrates a plurality of operation logs;
Fig. 6 illustrates a plurality of data logs;
Fig. 7 illustrates a plurality of user lists;
Fig. 8 illustrates a plurality of operation lists;
Fig. 9 illustrates a plurality of access policies;
Fig. 10A illustrates an access policy before an access authority is changed;
Fig. 10B illustrates an access policy after the access authority is changed;
Fig. 11A illustrates usage data before the access authority is changed;
Fig. 11B illustrates usage data after the access authority is changed;
Fig. 12A illustrates a lineage indicated by lineage data before the access authority is changed;
Fig. 12B illustrates a lineage indicated by lineage data after the access authority is changed;
Fig. 13A illustrates an example of contribution data before the access authority is changed;
Fig. 13B illustrates an example of contribution data after the access authority is changed;
Fig. 14 illustrates functions of the client computer and the server computer;
Fig. 15 illustrates a flow of usage management processing;
Fig. 16 illustrates a flow of lineage management processing;
Fig. 17 illustrates a flow of data processing;
Fig. 18 illustrates a flow of learning processing;
Fig. 19 illustrates a flow of inference processing;
Fig. 20 illustrates a flow of contribution management processing;
Fig. 21 illustrates a flow of first access management processing; and
Fig. 22 illustrates a flow of second access management processing.

### DESCRIPTION OF THE PREFERRED EMBODIMENTS

In the following description, an "interface apparatus" may be one or more interface devices. The one or more interface devices may be at least one of the following.
- One or more input/output (I/O) interface devices. The I/O (Input/Output) interface device is an interface device for at least one of an I/O device and a remote display computer. The I/O interface device for a display computer may be a communication interface device. The at least one I/O device may be either a user interface device, for example, an input device such as a keyboard and a pointing device, or an output device such as a display device.
- One or more communication interface devices. The one or more communication interface devices may be one or more communication interface devices of the same type (e.g., one or more network interface cards (NIC)), or may be two or more communication interface devices of different types (e.g., an NIC and a host bus adapter (HBA)).

In the following description, a "memory" is one or more memory devices that are an example of one or more storage devices, and may typically be a main storage device. The at least one memory device as the memory may be a volatile memory device or a non-volatile memory device.

In the following description, a "persistent storage apparatus" may be one or more persistent storage devices that are an example of one or more storage devices. Typically, the persistent storage device may be a nonvolatile storage device (e.g., an auxiliary storage device), and specifically, may be, for example, a hard disk drive (HDD), a solid state drive (SSD), a non-volatile memory express (NVME) drive, or a storage class memory (SCM) .

In addition, in the following description, a "storage apparatus" may be at least a memory out of a memory and a persistent storage apparatus.

In addition, in the following description, a "processor" may be one or more processor devices. The at least one processor device may typically be a microprocessor device such as a central processing unit (CPU), and may be other type of processor device such as a graphics processing unit (GPU). The at least one processor device may be a single-core or a multi-core. The at least one processor device may be a processor core. The at least one processor device may be a processor device in a broad sense, such as a circuit (e.g., a field-programmable gate array (FPGA), a complex programmable logic device (CPLD), or an application specific integrated circuit (ASIC)) that is an aggregate of gate arrays in a hardware description language that performs some or all of the processing.

In addition, although in the following description, a function may be described using expression "yyy unit", the function may be realized by executing one or more computer programs by a processor, may be realized by one or more hardware circuits (e.g., FPGA or ASIC), or may be realized by a combination thereof. In a case where the function is realized by executing the program by the processor, determined processing is appropriately performed using the storage apparatus and/or the interface apparatus, and thus, the function may be at least a part of the processor. The processing described with the function as a subject may be processing performed by a processor or an apparatus including the processor. The program may be installed from a program source. The program source may be, for example, a program distribution computer or a computer-readable storage medium (e.g., a non-transitory storage medium). The description of each function is an example, and a plurality of functions may be integrated into one function or one function may be divided into a plurality of functions.

Furthermore, although in the following description, information from which an output is obtained with respect to an input may be described with such expression as "xxx DS". However, the information may be data of any structure (e.g., it may be structured data or unstructured data), or may be a learning model represented by a neural network, a genetic algorithm, or a random forest that generates an output with respect to an input. Therefore, "xxx DS" can be referred to as "xxx information". In addition, in the following description, a configuration of each table is an example, and one table may be divided into two or more tables, or all or a part of two or more tables may be one table. Note that "DS" is an abbreviation of a data set, and may be, for example, a database.

Furthermore, arbitrary information (e.g., at least one of "ID", "name", and "number") may be adopted as information for identifying an element (identification information, identifier).

In addition, in the following description, in a case where the same kind of elements are described without distinction, common reference numerals among reference numerals may be used, and in a case where the same kind of elements are described while being distinguished, reference numerals may be used.

In the following, an embodiment of the present invention will be described with reference to the drawings. Note that the present invention is not limited by the following description.

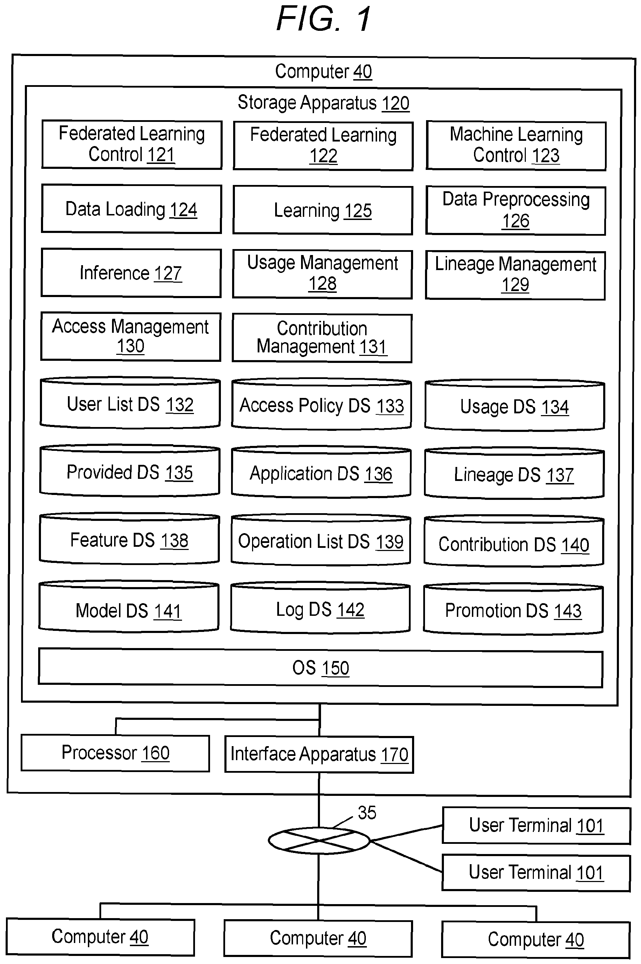

Fig. 1 illustrates a configuration of an entire system according to an embodiment of the present invention.

A computer system including a plurality of computers 40 is a data management system according to the present embodiment. Although data to be managed by the data management system according to the present embodiment is medical data related to medical care of a user (e.g., data indicating information such as date of birth, sex, and medical history), the present invention can manage, as a management target, data other than the medical data, for example, data related to insurance, finance, security, or the like (e.g., various privacy data).

At least one computer 40 can communicate with a user terminal 101. The user terminal 101 may be an information processing terminal such as a personal computer or a smartphone. Each computer 40 and each user terminal 101 are connected to a communication network 35. Communication between the computers 40 and communication between the computer 40 and the user terminal 101 are performed via the communication network 35. A communication network for the communication between the computers 40 and a communication network for the communication between the computer 40 and the user terminal 101 may be different.

The computer 40 may be a general-purpose computer or a dedicated computer. The computer 40 may be a physical computer or a logical computer (e.g. a virtual machine or cloud computing service).

The computer 40 illustrated in Fig. 1 is a physical computer. The computer 40 includes an interface apparatus 170, a storage apparatus 120, and a processor 160 connected thereto. Furthermore, the computer 40 can play one or both of roles of a client and a server. Data and functions of the computer 40 differ depending on a role played by the computer 40. The computer 40 illustrated in Fig. 1 can serve as both a client and a server.

The interface apparatus 170 performs communication via the communication network 35. The storage apparatus 120 stores data and a program. The processor 160 executes a program.

Examples of the data stored in the storage apparatus 120 include a user list DS 132, an access policy DS 133, a usage DS 134, a provided DS 135, an application DS 136, a lineage DS 137, a feature DS 138, an operation list DS 139, a contribution DS 140, a model DS 141, a log DS 142, and a promotion DS 143. The user list DS 132 is a set of user lists. The access policy DS 133 is a set of access policies for each user. The usage DS 134 is a set of usage data (e.g. data indicating a history of usage of an application, a model, or the like). The provided DS 135 is a set of provided data (data available for data processing). The application DS 136 is a set of application data (e.g., data as an application program itself or data including metadata of the application program). The lineage DS 137 is a set of lineage data (e.g., data of a lineage indicating how an application has used provided data). The feature DS 138 is a set of feature data of provided data. The feature data may include a feature of data for each user indicated by provided data, or may include a feature of the entire provided data. The operation list DS 139 is a set of operation lists. The contribution DS 140 is a set of contribution data (e.g., data indicating a contribution of an application or a model). The model DS 141 is a set of model data (e.g., data as a model itself or data including metadata of the model). The log DS 142 is a set of logs. The promotion DS 143 is a set of promotion data (e.g., data including data indicating a condition of promotion to a user). Although each DS may include one piece of data, it typically includes a plurality of pieces of data.

Execution of the program in the storage apparatus 120 by the processor 160 realizes functions such as a federated learning control 121, a federated learning 122, a machine learning control 123, a data loading 124, a learning 125, a data preprocessing 126, an inference 127, a usage management 128, a lineage management 129, an access management 130, and a contribution management 131. These functions 121 to 131 will be described later. Although these functions 121 to 131 are implemented on an operating system (OS) 150, at least some of these functions may be incorporated in the OS 150.

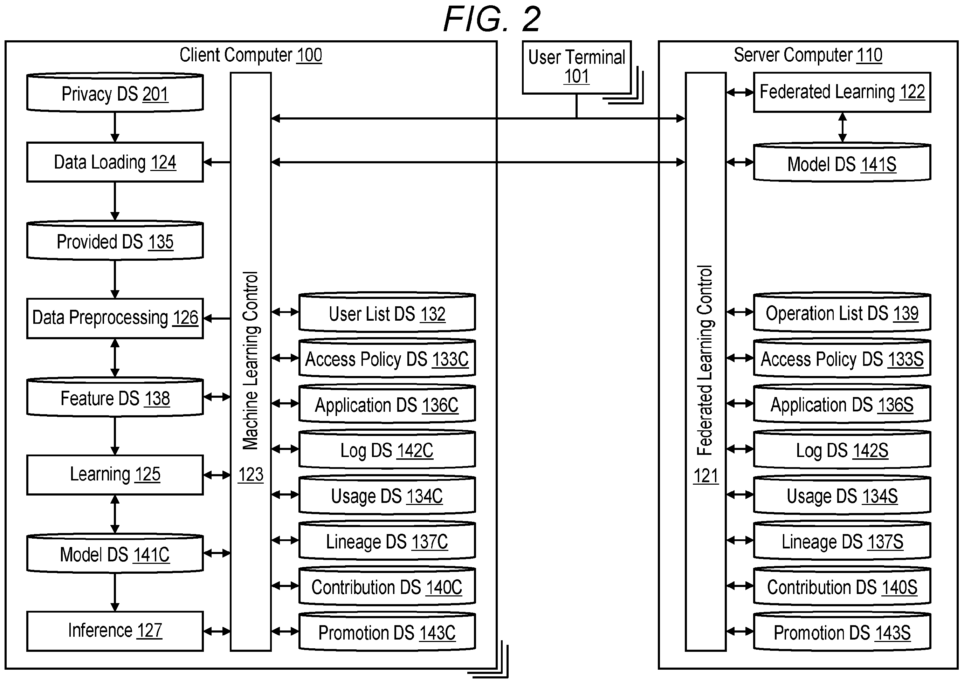

Fig. 2 illustrates a configuration of a client server system as the data management system.

The data management system includes a plurality of client computers 100 and a server computer 110. Each of the plurality of client computers 100 may be a physical computer provided in a hospital or other place, or may be a logical computer in a cloud or the like. The server computer 110 may also be a physical computer or a logical computer. In this data management system, federated learning is performed.

The client computer 100 is a computer that serves as a client. The server computer 110 is a computer that serves as a server. One or both of the client computer 100 and the server computer 110 can receive a request (inquiry) from the user terminal 101. Note that, in Fig. 2, for the same element existing in both the client computer 100 and the server computer 110, an end of a reference sign of the element in the client computer 100 includes "C", and an end of a reference sign of the element in the server computer 110 includes "S". A request may be transmitted from the client computer 100 to the server computer 110, or a request may be transmitted from the server computer 110 to the client computer 100.

The client computer 100 includes the machine learning control 123, a privacy DS 201, the data loading 124, the provided DS 135, the data preprocessing 126, the feature DS 138, the learning 125, a model DS 141C, the inference 127, the user list DS 132, an access policy DS 133C, an application DS 136C, the log DS 142, a usage DS 134C, a lineage DS 137C, a contribution DS 140C, and a promotion DS 143C.

The server computer 110 includes the federated learning control 121, the federated learning 122, a model DS 141S, the operation list DS 139, an access policy DS 133S, an application DS 136S, a log DS 142S, a usage DS 134S, a lineage DS 137S, a contribution DS 140S, and a promotion DS 143S.

In this data management system, for example, the following processing is performed.

The privacy DS 201 is stored in the storage apparatus 120 of the client computer 100. The privacy DS 201 may be, for example, a database of a hospital and includes privacy data. The privacy data is so-called raw data and includes data related to medical care of each of a plurality of users. The privacy data may exist, for example, for each period. For example, privacy data may exist such as privacy data for January, privacy data for February, and...

In the client computer 100, in response to a request from the machine learning control 123, the data loading 124 acquires privacy data from the privacy DS 201, converts the privacy data into provided data (data available for data processing), and includes the provided data in the provided DS 135. In response to the request from the machine learning control 123, the data preprocessing 126 acquires the provided data from the provided DS 135, generates feature data of the provided data, and includes the feature data in the feature DS 138. In response to the request from the machine learning control 123, the learning 125 creates a model using the feature data in the feature DS 138 (alternatively, relearning a model in the model DS 141C is performed), and includes data of the model in the model DS 141C. The inference 127 performs inference using the model in the model DS 141C.

In the client computer 100, a data log and an operation log are generated and stored in a log DS 142C as appropriate. Furthermore, a user list is generated and stored in the user list DS 132 as appropriate. In addition, the machine learning control 123 refers to or updates the user list DS 132, the access policy DS 133C, the application DS 136C, the log DS 142, the usage DS 134C, the lineage DS 137C, the contribution DS 140C, and the promotion DS 143C as appropriate.

Note that in the present embodiment, there are the following applications. The application DS 136 includes, for each application, data (e.g., AID and other data) indicating the application. The AID and other data related to the application in the present embodiment can be specified from the application DS 136.
- Data loading processing (processing of acquiring data from the privacy DS 201, performing filtering, anonymization, and the like, and storing a processing result in the provided DS 135).
- Data preprocessing (processing of acquiring data from the provided DS 135, generating a feature to be used in learning, and storing the feature in the feature DS 138) .
- Learning processing (processing of acquiring the feature from the feature DS 138, generating a model on the basis of the feature, and storing the model in the model DS 141C) .
- Federated learning processing (processing of generating an integrated model from a plurality of models on the server computer 110 side and storing the integrated model in the model DS 141S while exchanging model information (also referred to as parameters) between the server computer 110 and the client computer 100 in cooperation with the above learning processing).
- Inference processing (processing of acquiring the model from the model DS 141C, acquiring data of an inference target from the privacy DS 201, the provided DS 135, or the feature DS 138, and generating an inference result using the model and the data).

Note that these processing (applications) may be instructed from the user terminal 101 to the client computer 100 or the server computer 110 as appropriate (or collectively). Furthermore, in order to prevent leakage of data regarding an individual user (e.g., privacy data or data related thereto), the federated learning processing among the above processing may be executed by the server computer 110, and the processing other than the federated learning processing among the above processing may be executed by the client computer 100.

In the client computer 100, the machine learning control 123 acquires the model data in the model DS 141C and transmits the model data to the server computer 110. The server computer 110 receives the model data from the plurality of client computers 100, and the federated learning control 121 includes the received model data in the model DS 141S. In the server computer 110, in response to a request from the federated learning control 121, the federated learning 122 acquires the model data from the plurality of client computers 100 from the model DS 141S, generates model data on the basis of the model data (e.g., generates merged model data), and transmits the generated model data to each of the plurality of client computers 100. In the client computer 100 that has received the model data from the server computer 110, the machine learning control 123 includes the model data in the model DS 141C. Hereafter, a model indicated by the latest model data received from the server computer 110 is used for learning by the learning 125 or used for inference by the inference 127.

In the server computer 110, the federated learning control 121 refers to or updates the operation list DS 139, the access policy DS 133S, the application DS 136S, the log DS 142S, the usage DS 134S, the lineage DS 137S, the contribution DS 140S, and the promotion DS 143S. For example, the DSs 133S, 136S, 142S, 134S, 137S, 140S, and 143S in the server computer 110 may include DSs 133C, 136C, 142C, 134C, 137C, 140C, and 143C in each client computer 100.

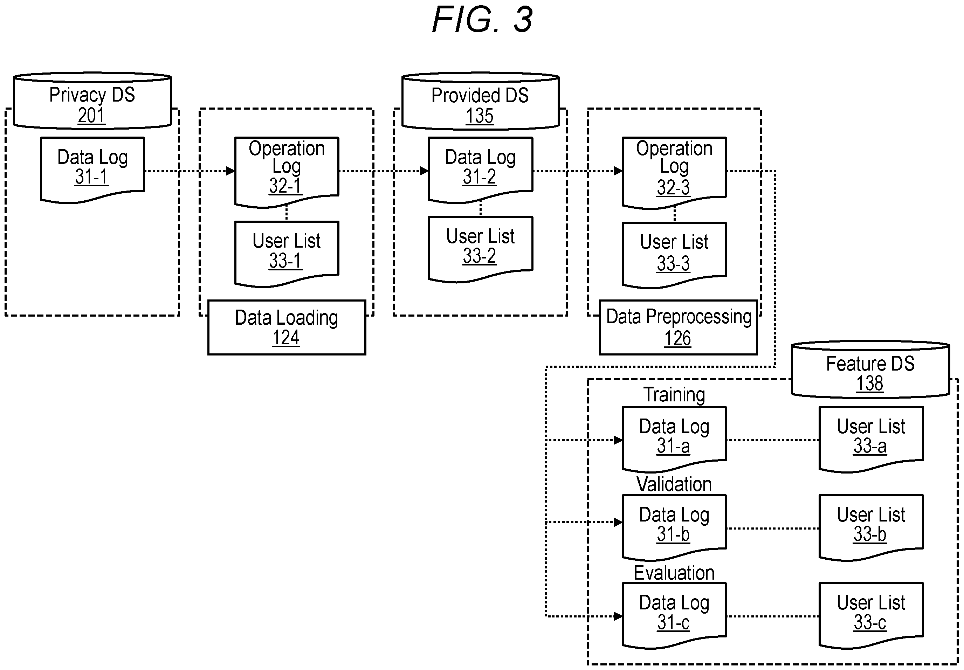

Fig. 3 schematically illustrates a flow of processing up to feature storage in the client computer 100.

In the log DS 142C, a data log 31-1 of the privacy data in the privacy DS 201 is stored. The data loading 124 acquires privacy data corresponding to the data log 31-1, generates provided data on the basis of the privacy data, and includes the provided data in the provided DS 135. In this series of operation (processing), the data loading 124 generates an operation log 32-1 on the basis of the data log 31-1, and generates a data log 31-2 corresponding to the stored provided data on the basis of the operation log 32-1. In addition, the data loading 124 generates a user list 33-1 associated with the operation log 32-1, and generates a user list 33-3 associated with the data log 31-2.

The data preprocessing 126 acquires provided data, generates three types of feature data on the basis of the provided data, and includes the three types of feature data in the feature DS 138. In this series of operation (processing), the data preprocessing 126 generates an operation log 32-3 on the basis of the data log 31-2, and generates data logs 31-a to 31-c corresponding to the stored three types of feature data on the basis of the operation log 32-3. In addition, the data loading 124 generates the user list 33-3 associated with the operation log 32-3, and generates user lists 33-a to 33-c associated with the data logs 31-a to 31-c.

The machine learning control 123 includes the data logs 31-1, 31-2, and 31-a to 33-c, and the operation logs 32-1 and 32-3 in the log DS 142C. In addition, the machine learning control 123 includes the user lists 33-1 to 33-3 and 33-a to 33-c in the user list DS 132.

According to the example illustrated in Fig. 3, although three types of feature data (feature data used for model training, feature data used for model validation, and feature data used for model evaluation) are generated for one piece of provided data, the number of types of the generated feature data may be more or less than three.

In addition, a user list 33 is generated for each data log and each operation log. The user list 33 corresponding to the data includes a list of users whose data is included in the corresponding data (data corresponding to the data log) and/or a list of users whose data is not included in the corresponding data. The user list 33 corresponding to the operation log includes a list of users whose data is included in target data (data as a target of the operation corresponding to the operation log) and/or a list of users whose data is not included in the target data.

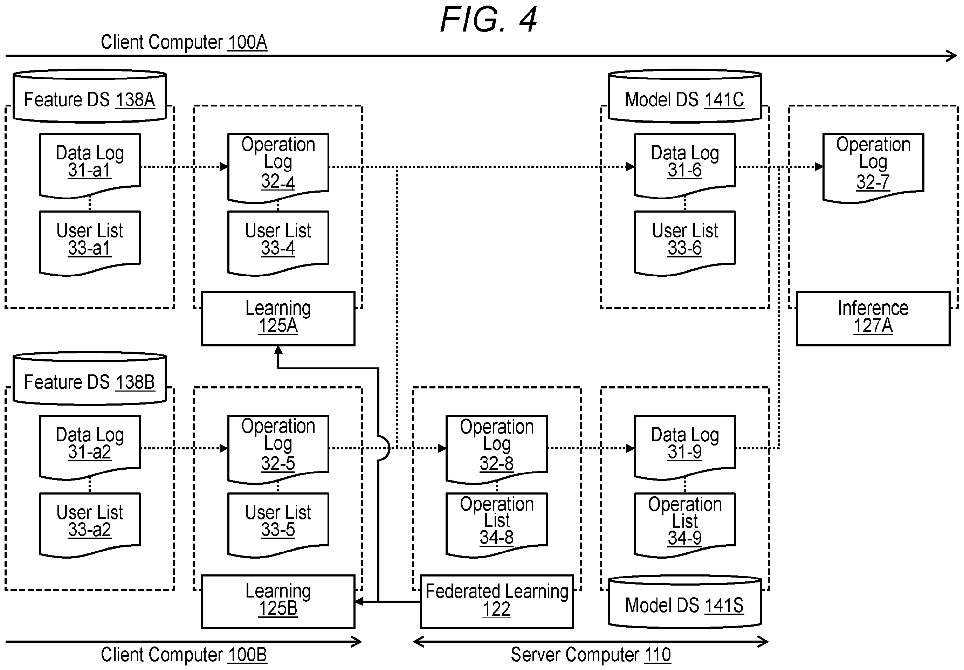

Fig. 4 schematically illustrates a flow of processing related to learning in the client computer 100 and federated learning in the server computer 110.

Also in this flow, as described with reference to Fig. 3, the user list 33 is generated for each data log and each operation log.

In a client computer 100A, a learning 125A acquires feature data, and learns, validates, or evaluates a model. Learning is taken as an example. The learning 125A acquires feature data for training, learns a model, and transmits data of the learned model to the server computer 110. In this series of operation (processing), the learning 125A generates an operation log 32-4 on the basis of a data log 31-a1 corresponding to the feature data for training. A user list 33-4 is associated with the operation log 32-4.

In the client computer 100A, the learning 125A includes the data of the model after the learning in the model DS 141C. The learning 125A generates a data log 31-6 corresponding to this data. A user list 33-6 is associated with the data log 31-6.

In the client computer 100A, an inference 127A performs inference using the learned model. The inference 127 generates an operation log 32-7 corresponding to this inference. The user list 33 may be associated with the operation log 32-7.

In a client computer 100B, a learning 125B acquires feature data for training, learns a model, and transmits data of the learned model to the server computer 110. In this series of operation (processing), the learning 125B generates an operation log 32-5 on the basis of a data log 31-a2 corresponding to the feature data for training. A user list 33-5 is associated with the operation log 32-5.

In the server computer 110, the federated learning 122 generates model data obtained by merging the model data from the client computers 100A and 100B, and includes the merged model data in the model DS 141S. The federated learning 122 generates an operation log 32-8 corresponding to the federated learning and also generates a data log 31-9 corresponding to the merged model data. The federated learning 122 generates an operation list 34-8 to be associated with the operation log 32-8 and generates an operation list 34-9 to be associated with the data log 31 - 9. The federated learning control 121 includes the logs 32-8 and 31-9 in the log DS 142S and includes the operation lists 34-8 and 34-9 in the operation list DS 139.

The transmission of the model data from the plurality of client computers 100 to the server computer 110 and the merging (federated learning) of the model data in the server computer 110 may be repeated. The server computer 110 may transmit merged model data with the highest accuracy to each client computer 100. Specifically, although the transmission of merged model data of each client computer 100 may be performed every time a merged model is obtained, the transmission may be performed after model merging is repeated.

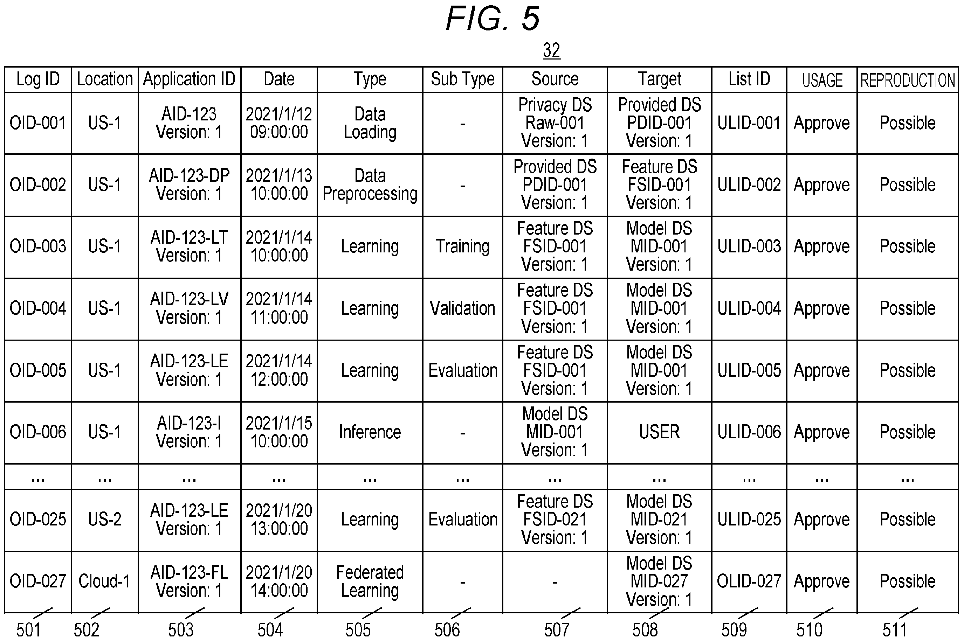

Fig. 5 illustrates a plurality of operation logs 32.

A plurality of rows are illustrated in Fig. 5, one row corresponding to one operation log 32. The operation log 32 has information such as Log ID 501, Location 502, Application ID 503, Date 504, Type 505, Sub Type 506, Source 507, Target 508, List ID 509, usage 510, and reproduction 511. These pieces of information 501 to 511 will be described by taking one operation log 32 as an example.

The Log ID 501 represents an OID (operation ID) of the corresponding operation (operation corresponding to the operation log 32). The Location 502 represents a location where the corresponding operation has been performed.

The Application ID 503 represents an ID of an application (AID) to which the corresponding operation belongs. In the AID, "DP" means Data Preprocessing. "LT" means Learning (Training). "LV" means Learning (Validation). "LE" means Learning (Evaluation). "I" means Inference. "FL" means Federated Learning.

The Date 504 represents execution date and time of the corresponding operation (a unit of date and time may be year, month, day, hour, minute, and second, or may be coarser or finer). The Type 505 represents a type of a function that has implemented the corresponding application. The Sub Type 506 represents details (specifically, is it Training, Validation, or Evaluation?) of a corresponding application when a function that has implemented the corresponding application is the learning 125.

The Source 507 represents an ID of data as an input in the corresponding operation. The Target 508 represents an ID of data as an output in the corresponding operation. "PDID" means an ID of provided data. "FSID" means an ID of feature data. "MID" means an ID of a model.

The List ID 509 represents an ID of the user list 33 or an operation list 34 associated with the corresponding operation. "ULID" means an ID of the user list 33. "OLID" means an ID of the operation list 34.

The usage 510 represents whether usage of the application to which the corresponding operation belongs is permitted or not. "Approve" means that usage is permitted. "Disapprove" means that usage is prohibited. Unless an application provider prohibits usage of the application, "Approve" (available) may continue.

The reproduction 511 represents whether or not output data (data identified from the Target 508) by the corresponding operation can be reproduced. "Possible" means that reproduction is possible. "Impossible" means that reproduction is impossible.

According to the plurality of operation logs 32 illustrated in Fig. 5, for example, operation is as follows.
- Operation corresponding to the Location 502 "US1" is performed in a certain client computer 100, and operation corresponding to the Location 502 "US2" is performed in another client computer 100. Operation corresponding to the Location 502 "Cloud-1" is performed in the server computer 110.
- According to the Source 507 and the Target 508 of the operation logs 32 with the Log IDs 501 "OID-001" to "OID-003", data is input and output in a flow of the privacy DS 201 → the provided DS 135 → the feature DS 138 → the model DS 141C.
- According to the operation logs 32 with the Log IDs 501 "OID-005" and" OID-006", data is acquired from the feature DS 138, inferred is performed using the model in the model DS 141C, and data output by the inference is provided to the user (the user terminal 101).

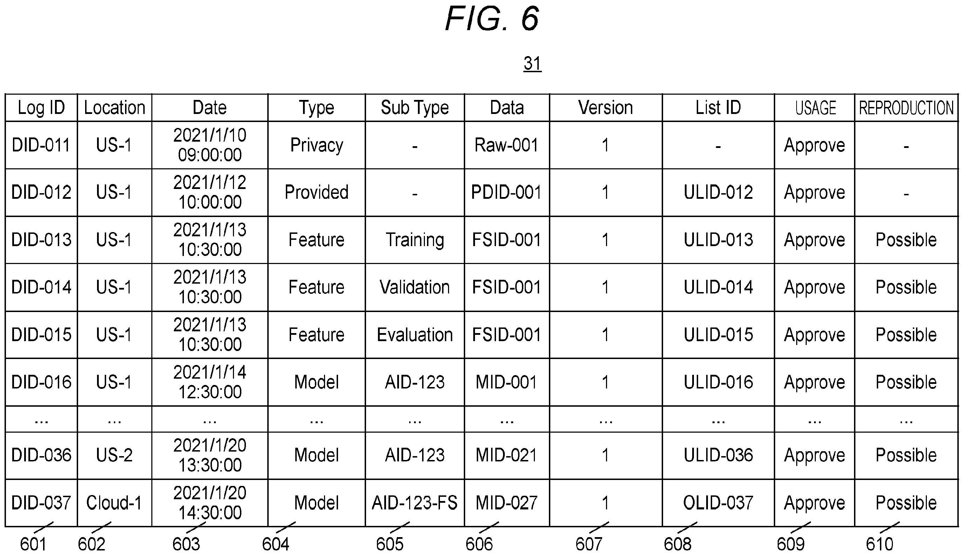

Fig. 6 illustrates a plurality of data logs 31.

A plurality of rows are illustrated in Fig. 6, one row corresponding to one data log 31. The data log 31 has information such as Log ID 601, Location 602, Date 603, Type 604, Sub Type 605, Data 606, Version 607, List ID 608, usage 609, and reproduction 610. These pieces of information 601 to 610 will be described by taking one data log 31 as an example.

The Log ID 601 represents DID (a data ID) of the corresponding data. The "corresponding data" mentioned here is data corresponding to operation, and DID is an ID of a log related to the data. The Location 602 represents a location where the corresponding data is present. The Date 603 represents date and time when the corresponding data has been obtained.

The Type 604 represents a type of the corresponding data. The Sub Type 605 represents processing or an application that uses the corresponding data.

The Data 606 represents an ID recognized in the operation as an ID of the corresponding data (specifically, an ID in conjunction with the Source 507 or the Target 508 in Fig. 5). The Version 607 represents a version of the corresponding data.

The List ID 608 represents an ID of the user list 33 or the operation list 34 associated with the corresponding data.

The usage 609 represents whether usage of the application that processes the corresponding data is permitted or not. "Approve" means that usage is permitted. "Disapprove" means that usage is prohibited.

The reproduction 610 represents whether or not the corresponding data can be reproduced. "Possible" means that reproduction is possible. "Impossible" means that reproduction is impossible.

The operation log 32 is generated (output) with the data log 31 as an input, and the data log 31 is generated (output) with the operation log 32 as an input. According to Figs. 5 and 6, operation is as follows, for example. Specifically, with the data log 31 whose Log ID 501 is "DID-001" as an input, the operation log 32 whose Log ID 501 is "OID-001" is generated (e.g., the Data 606 "Raw-001" is taken over by the Source 507). Next, with the operation log 32 whose Log ID 501 is "OID-001" as an input, the data log 31 whose Log ID 501 is "DID-002" is generated (e.g., "PDID-001" in the Target 508 is taken over by the Data 606 and is reflected in the Type 604).

According to the examples illustrated in Figs. 5 and 6, the following can be said (details will be described later).
- The user list 33 or the operation list 34 is managed for each operation or data. As a result, it is possible to grasp which user's data has been used/has not been used for each operation or data.
- A data lineage can be configured by tracing an input/output relationship between the operation log 32 and the data log 31. As a result, it is possible to grasp when and how user data has been used.
- Whether to use or not and whether to reproduce or not are managed. As a result, it is possible to manage processing and data whose reproducibility has lost as an access authority is changed.

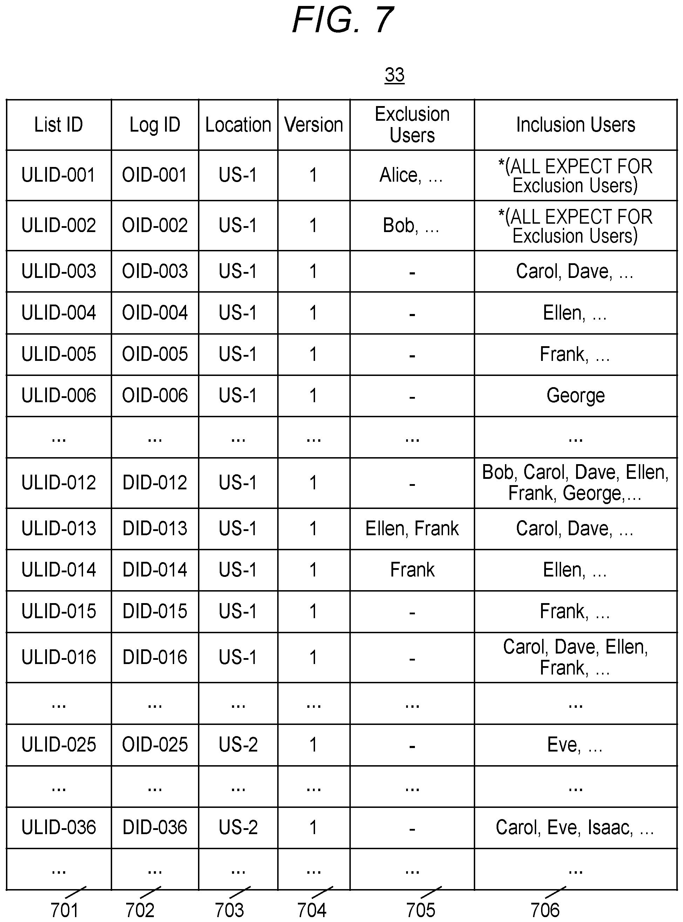

Fig. 7 illustrates a plurality of the user lists 33.

A plurality of rows are illustrated in Fig. 7, one row corresponding to one user list 33. The user list 33 has information such as List ID 701, Log ID 702, Location 703, Version 704, Exclusion Users 705, and Inclusion Users 706. These pieces of information 701 to 706 will be described by taking one user list 33 as an example.

The List ID 701 represents an ID of the user list 33. The Log ID 702 represents an ID of a correspondence log (the operation log 32 or the data log 31 associated with the user list 33). The Location 703 is the same information as the Location 502 or 601 included in the correspondence log. The Version 704 represents a version of the user list 33.

The Exclusion Users 705 is a list of users (e.g., a list of user names) excluded (not included) from data or operation corresponding to the correspondence log. The Inclusion Users 706 is a list of users included in the data or the operation corresponding to the correspondence log. The example illustrated in Fig. 7 is, for example, as follows.
- Alice: a user who refuses to provide data to machine learning/federated learning (see the row having "OID-001" in Figs. 7 and 5).
- Bob: a user who refuses to provide data to an application (AID-123) (see the row having "OID-002" in Figs. 7 and 5).
- Ellen: a user who prohibits using feature data for training (see the row with "DID-013" in Figs. 7 and 6).
- Frank: a user who prohibits using data for features for training and validation (see rows having "DID-013" and" DID-014" in Figs. 7 and 6).
- Carol: a user who goes to a plurality of hospitals (in Fig. 7, "Carol" is recited in both of the rows having the Location 703 "US-1" and "US-2").

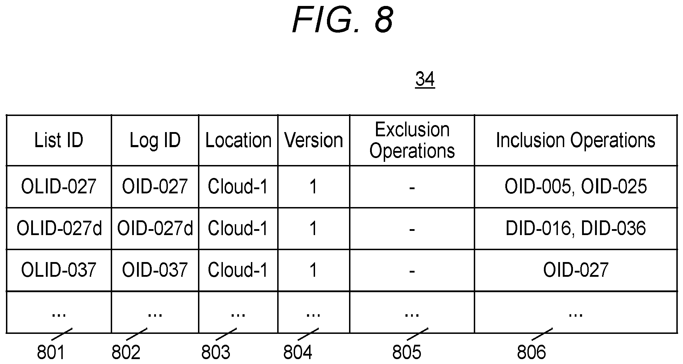

Fig. 8 illustrates a plurality of the operation lists 34.

A plurality of rows are illustrated in Fig. 8, one row corresponding to one operation list 34. The operation list 34 has information such as List ID 801, Log ID 802, Location 803, Version 804, Exclusion Operations 805, and Inclusion Operations 806. These pieces of information 801 to 806 will be described by taking one operation list 34 as an example.

The List ID 801 represents an ID of the operation list 34. The Log ID 802 represents an ID of a corresponding log (the operation log 32 or the data log 31 associated with the operation list 34). The Location 803 is the same information as the Location 502 or 601 included in the correspondence log. The Version 804 represents a version of the operation list 34.

The Exclusion Operations 805 is a list of operations or data (e.g., a list of OIDs or DIDs) excluded (not included) from data or operation corresponding to a corresponding log. The Inclusion Operations 806 is a list of operation or data included in data or operation corresponding to the corresponding log.

Note that since the server computer 110 has the operation list 34 instead of the user list 33, in a case where there is a plurality of client computers 100, the operation log 32 and the data log 31 for each client computer 100 can be managed in the server computer 110, and a user's name can be prevented from being notified to the server computer 110.

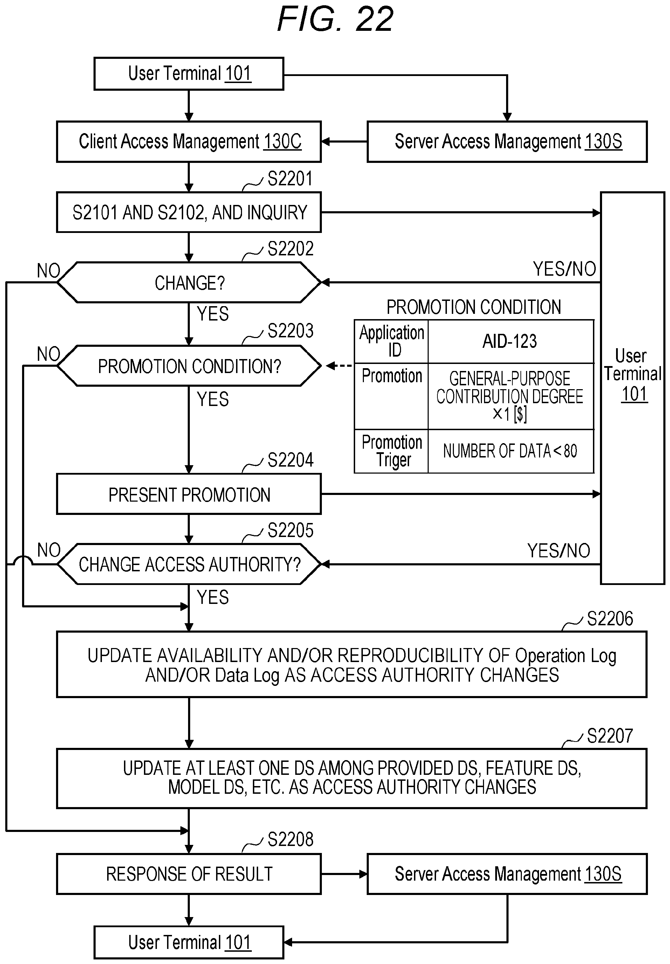

Furthermore, the operation list 34 is used in server-side processing illustrated in Fig. 22. For example, in a case where reproducibility of certain preprocessing is lost, reproducibility is also lost in learning processing/federated learning processing using a feature of the preprocessing. When reproducibility of "OID-005" in Fig. 5 is lost, it is necessary to propagate non-reproducibility to "OID-027" in Fig. 5 or "MID-027" in Fig. 6. In order to realize this propagation, the operation list 34 of Fig. 8 is used.

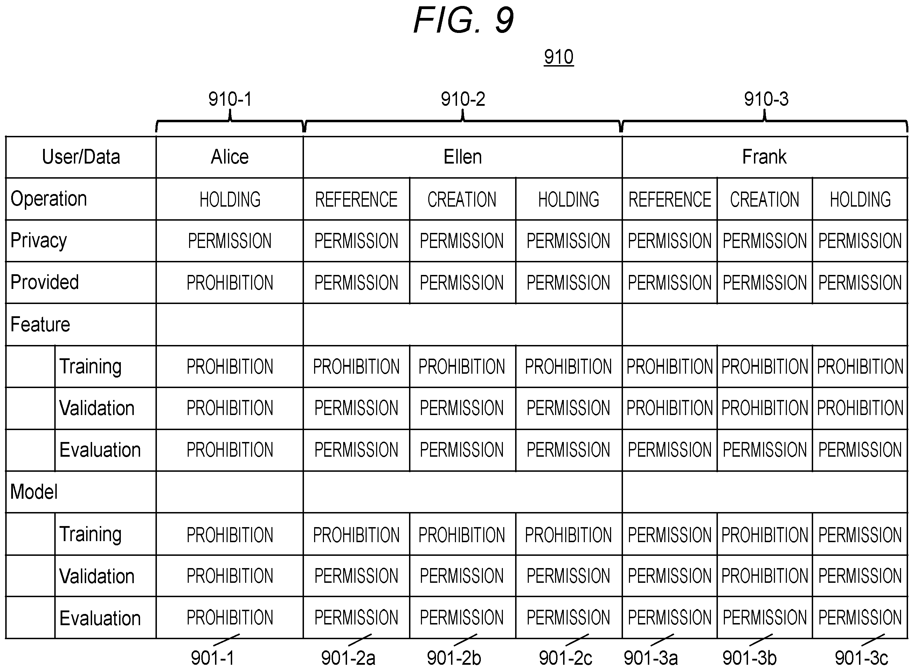

Fig. 9 shows a plurality of the access policies.

The access policy DS 133 includes an access policy 910 for each user. Each access policy 910 has a column 901 for each operation attribute. Each column 901 represents an access authority (e.g., "permission" or "prohibition" of usage) for each data type. The access policy 910 of each user is reflected in the user list 33 and the operation list 34.

For example, Alice has only one operation attribute, "holding". Therefore, an access policy 910-1 of Alice is configured by one column 901-1. According to the access policy 910-1, while the data of Alice may be included in the privacy data, the data of Alice is prohibited from being used for the provided data, the feature data, and the model data. In other words, Alice is a user who refuses to provide data to the machine learning/federated learning, and for example, "Alice" is set to Exclusion Users 705 of the user list 33 with "ULID-001".

Furthermore, for example, Ellen has three operation attributes "reference", "creation", and "holding". Therefore, an access policy 910-2 of Ellen is configured by three columns 901-2a, 901-2b, and 901-2c. According to the access policy 910-2, the data of Ellen is prohibited from being used for the feature data for training (and the model data for training). In other words, Ellen is a user who prohibits using data for feature data for training, and for example, "Ellen" is set to Exclusion Users 705 of the user list 33 with "ULID-013".

Furthermore, for example, Frank has three operation attributes "reference", "creation", and "holding". Therefore, an access policy 910-3 of Frank is configured by three columns 901-3a, 901-3b, and 901-3c. According to the column 901 -3a, while usage of the feature data for training and validation is prohibited, usage of the model data for training and validation is permitted. This means that a model generated in the past using the feature data including the data of Frank is permitted to be used.

In the following, using Ellen as an example, examples of the access policy 910-2, usage data, lineage data, and contribution data before and after an access authority is changed will be described.

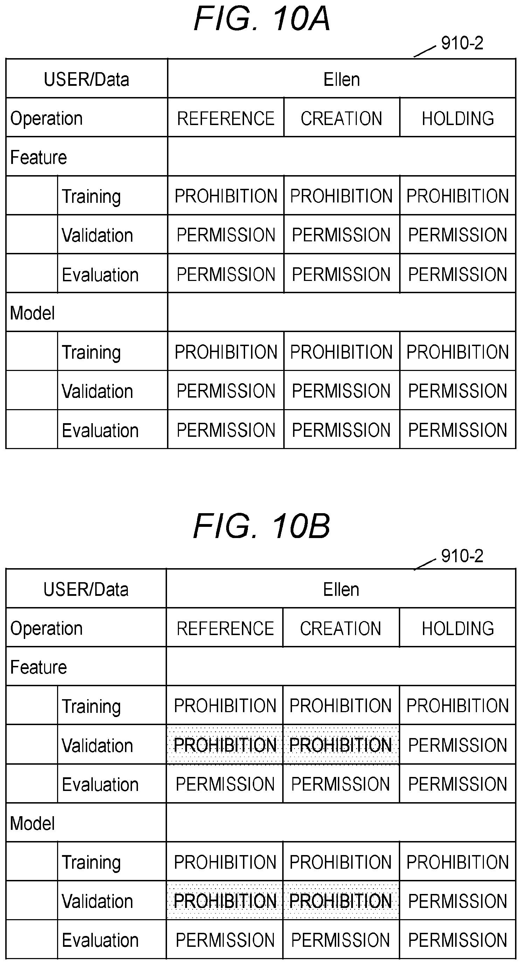

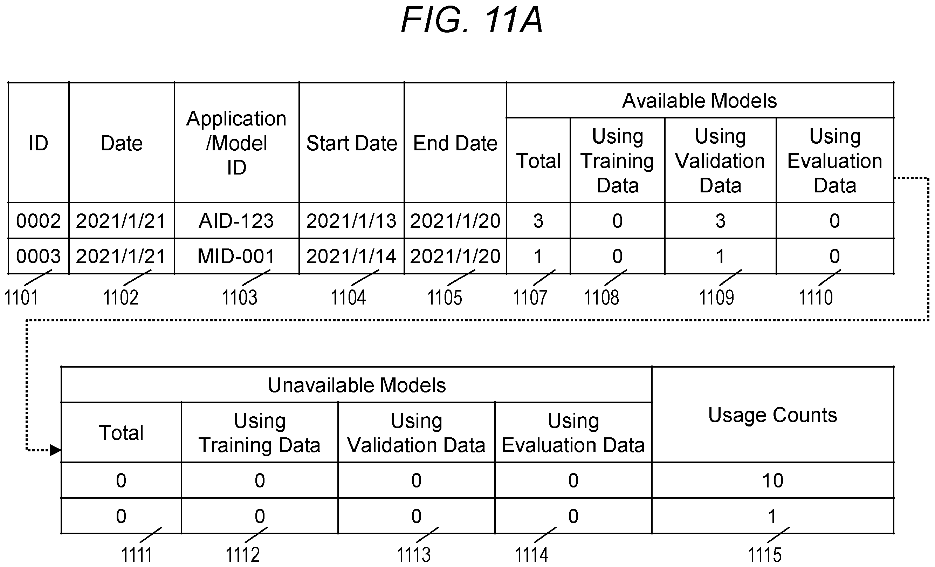

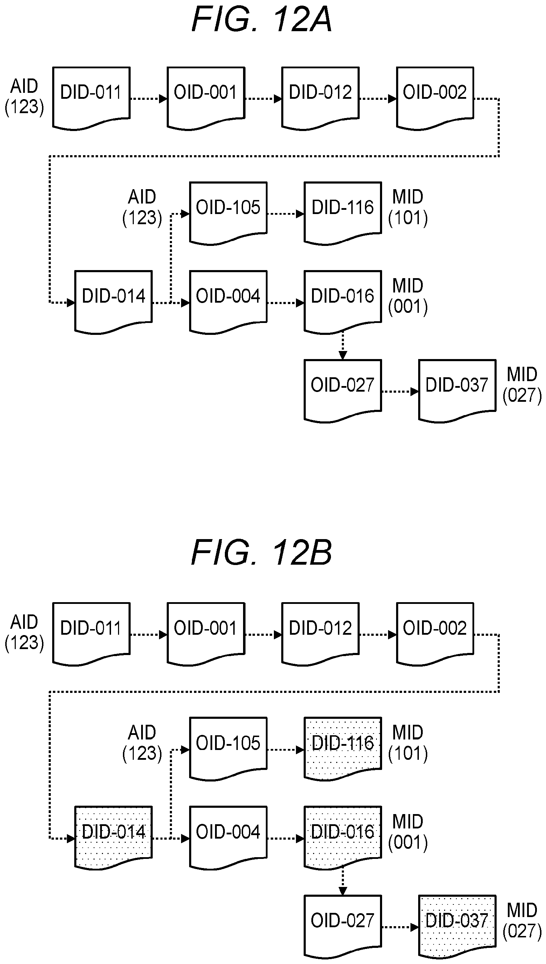

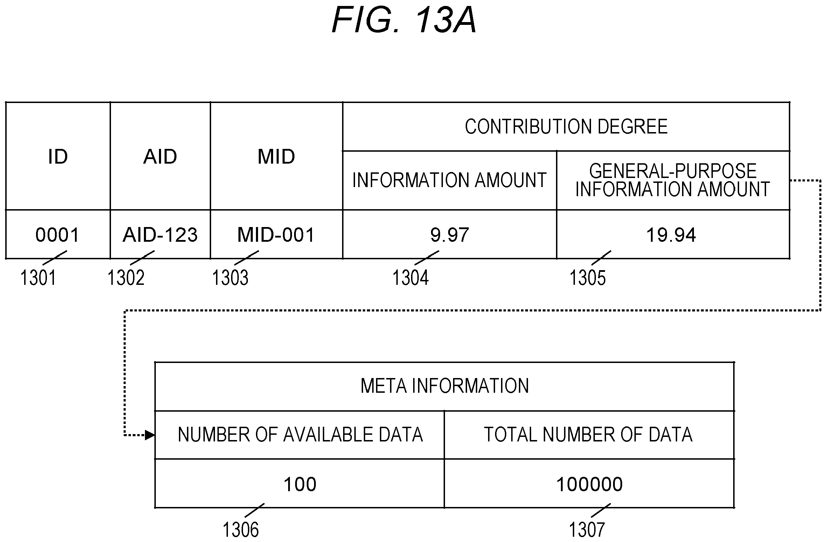

Fig. 10A illustrates the access policy 910-2 before the access authority is changed. Fig. 11A illustrates usage data before the access authority is changed. Fig. 12A illustrates a lineage indicated by lineage data before the access authority is changed. Fig. 13A illustrates an example of contribution data before the access authority is changed. The data illustrated in Figs. 10A, 11A, 12A, and 13A is data corresponding to Ellen.

The usage data illustrated in Fig. 11A indicates a part of the usage data in the usage DS 134C. The usage data has information such as ID 1101, Date 1102, Application/Model ID 1103, Start Date 1104, End Date 1105, Available Models (Total 1107, Using Training Data 1108, Using Validation Data 1109, and Using Evaluation Data 1110), Unavailable Models (Total 1111, Using Training Data 1112, Using Validation Data 1113, and Using Evaluation Data 1114), and Usage Counts 1115.

The ID 1101 represents an ID of the usage data. The Date 1102 represents acquisition date and time of the usage data. The Application/Model ID 1103 represents an ID of an application or a model corresponding to the usage data. The Start Date 1104 represents start date and time of the application or model corresponding to the usage data. The End Date 1105 represents end date and time of the application or model corresponding to the usage data.

Regarding Available Models, the Total 1107 represents a total of available models, and the information 1108 to 1110 represents a breakdown thereof. Specifically, the Using Training Data 1108 represents the number of available models for training, the Using Validation Data 1109 represents the number of available models for validation, and the Using Evaluation Data 1110 represents the number of available models for evaluation. A plurality of models (versions) belongs to the application, and the most accurate model is used when used for inference. Specifically, for example, when the application is for "cancer risk prediction", a plurality of models may be prepared for one application, such as a prediction model prepared in a certain month and a prediction model prepared in the next month.

Regarding Unavailable Models, the Total 1111 represents a sum of unavailable models and the information 1112 to 1114 represents a breakdown thereof. Specifically, the Using Training Data 1112 represents the number of unavailable models for training, the Using Validation Data 1113 represents the number of unavailable models for validation, and the Using Evaluation Data 1114 represents the number of unavailable models for evaluation.

The Usage Counts 1115 represents the number of times of usage of a model corresponding to the usage data or the number of times of usage of a model belonging to the application corresponding to the usage data.

The lineage illustrated in Fig. 12A has a DAG structure with a DID (the data log 31) or an OID (the operation log 32) as a node. For example, by tracing the operation log 32 and the data log 31 from the data log 31 having a DID specified using an AID as a key, it is possible to specify a used model among models belonging to an application corresponding to the AID. Note that AID, DID, OID, and MID illustrated in Fig. 12A (and Fig. 12B) correspond to AID, DID, OID, and MID in Figs. 5 and 6. For example, a flow from the AID (123) to the MID (027) is a flow related to federated learning. In addition, a flow from the AID (123) to a MID (101) means that the feature data for validation corresponding to the "DID-014" has been reused. In this way, it can be seen how the application corresponding to the AID (123) uses data (data such as Ellen's data).

The contribution data illustrated in Fig. 13A is a part of contribution data in the contribution DS 140C. The contribution data has information such as ID 1301, AID 1302, MID 1303, a contribution degree (an information amount 1304 and a general-purpose information amount), and meta information (the number of available data 1306 and the total number of data 1307).

The ID 1301 represents an ID of the contribution data. The AID 1302 represents an ID of an application corresponding to the contribution data. The MID 1303 represents an ID of a model corresponding to the contribution data.

The information amount 1304 is an information amount of data related to the model corresponding to the contribution data, and is based on the number of available data 1306 and the total number of data 1307.

The number of available data 1306 represents the number of data of a target user (e.g., "Ellen") of the application corresponding to the contribution data. For example, "100" means that there are 100 pieces of data (100 pieces of data in the provided data to the application) for the target user. In the federated learning processing, the "number of available data" means the number of data of the target user included in the privacy DS 201 of all the client computers 100.

The total number of data 1307 represents the total number of data in the privacy DS 201. For example, "100,000" means that there are 100,000 data in the privacy DS 201. In the federated learning processing, the "total number of data" means the number of data included in the privacy DS 201 of all the client computers 100.

The information amount 1304 is, for example, -log₂ (the number of available data 1306/the total number of data 1307). Therefore, in the case illustrated in Fig. 13A, the information amount 1304 is "9.97".

The general-purpose information amount 1305 is an information amount of data that can be used for general purpose for data related to a model corresponding to the contribution data, and is based on the information amount 1304 and setting of an access authority (e.g., the number of "permissions") for the operation attribute "creation" related to the model corresponding to the contribution data. Specifically, for example, the general-purpose information amount 1305 is a product of the information amount 1304 and the number of "permissions" of the Validation and Evaluation for the operation attribute" creation" regarding the model corresponding to the contribution data. Therefore, in a case where the number of "permissions" is two, the general-purpose information amount 1305 is "19.94" as illustrated in Fig. 13A.

As described above, the contribution degree indicated by the contribution data is based on an information amount of data related to the model corresponding to the contribution data and an access authority regarding the model.

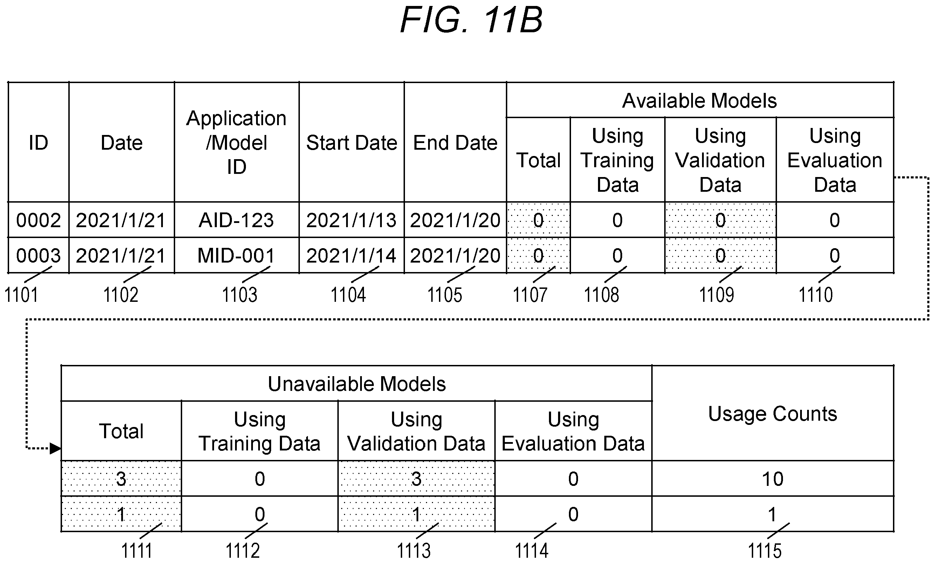

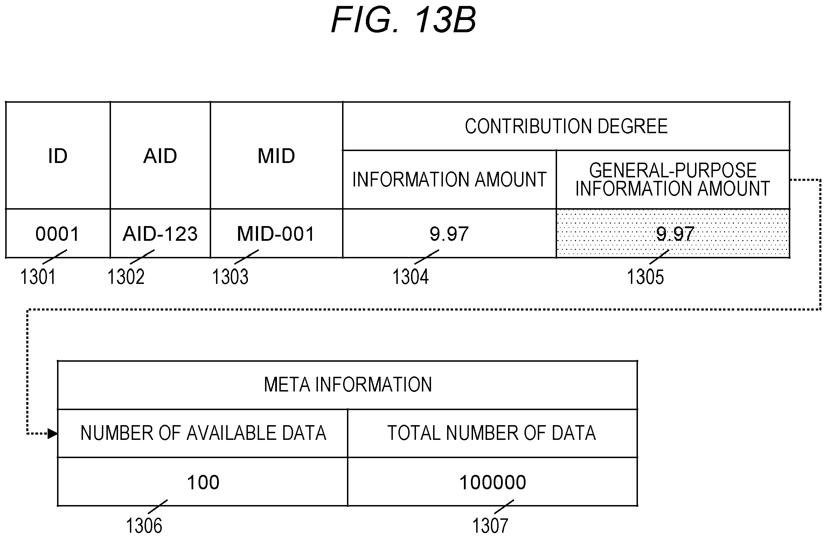

Fig. 10B illustrates the access policy 910-2 after the access authority is changed. Fig. 11B illustrates usage data after the access authority is changed. Fig. 12B illustrates lineage data after the access authority is changed. Fig. 13B illustrates an example of contribution data after the access authority is changed.

As illustrated in Fig. 10B, it is assumed that for each of the operation attributes "reference " and" creation" among the access authorities represented by the access policy 910 -2, usage of Ellen's data for feature data for validation is changed from "permission" to "prohibition", and usage of Ellen's data for a model for validation is changed from "permission" to "prohibition".

With this access authority change, as illustrated in Fig. 11B, an available model is changed to an unavailable model for both "AID-123" and "MID-001". Specifically, with respect to "AID-123", Using Validation Data 1109 of Available Models is changed from "3" to "0", and Using Validation Data 1113 of Unavailable Models is changed from "0" to "3". Similarly, with respect to "MID-001", Using Validation Data 1109 of Available Models is changed from "1" to "0", and Using Validation Data 1113 of Unavailable Models is changed from "0" to "1".

As illustrated in Fig. 12B, this access authority change results in making unavailable data corresponding to "DID-014" (feature data for validation corresponding to the model for validation that has been made unavailable), data corresponding to "DID-116" (feature data for validation corresponding to the model for validation that has been made unavailable), "DID-016" (data of the model for validation that has been made unavailable), and "DID-037" (data of a model obtained by merging the model for validation that has been made unavailable by federated learning). Specifically, for example, the usage 609 in the data log 31 corresponding to these data is changed to "Disapprove".

In addition, this access authority change results in bringing the access authority regarding Validation to "prohibition", and the access authority regarding Evaluation to "permission", so that the number of "permissions" is one. Thus, the general-purpose information amount 1305 is "9.97" which is the same as the information amount 1304.

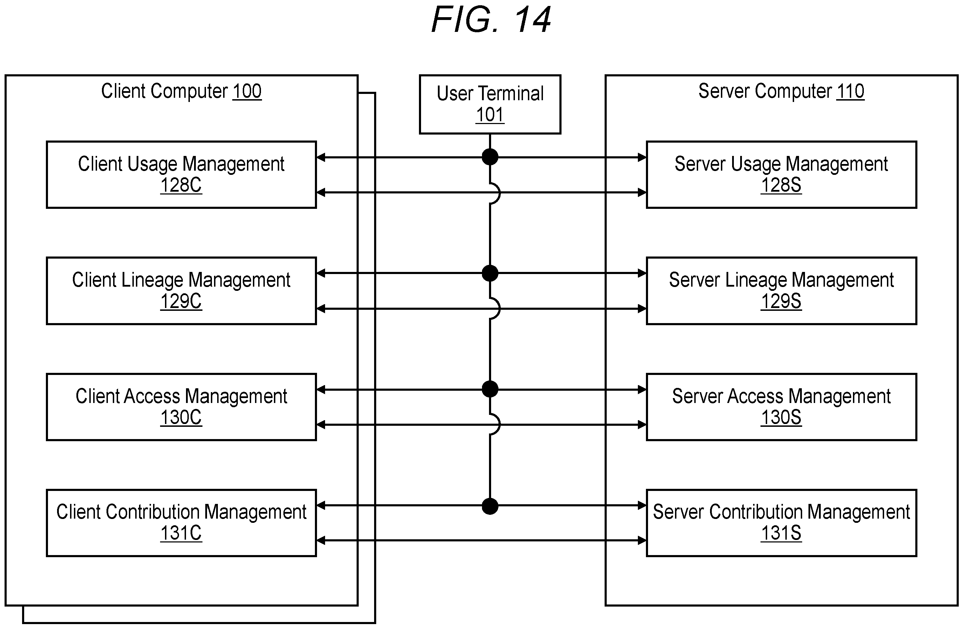

Fig. 14 illustrates functions of the client computer 100 and the server computer 110.

The usage management 128, the lineage management 129, the access management 130, and the contribution management 131 exist in both the client computer 100 and the server computer 110. In the following, for each of these functions 129 to 131, "client" is attached to the function in the client computer 100, and "server" is attached to the function in the server computer 110.

A client usage management 128C and a server usage management 128S communicate with each other. A client lineage management 129C and a server lineage management 129S communicate with each other. A client access management 130C and a server access management 130S communicate with each other. A client contribution management 131C and a server contribution management 131S communicate with each other.

The user terminal 101 can issue a request to either the server computer 110 or the client computer 100. For example, when a target relates to a specific base, the user terminal 101 may issue a request to the client computer 100 related to the base. On the other hand, the user terminal 101 may issue a request to the server computer 110 when the target relates to all bases.

In the following, several processing performed in the present embodiment will be described.

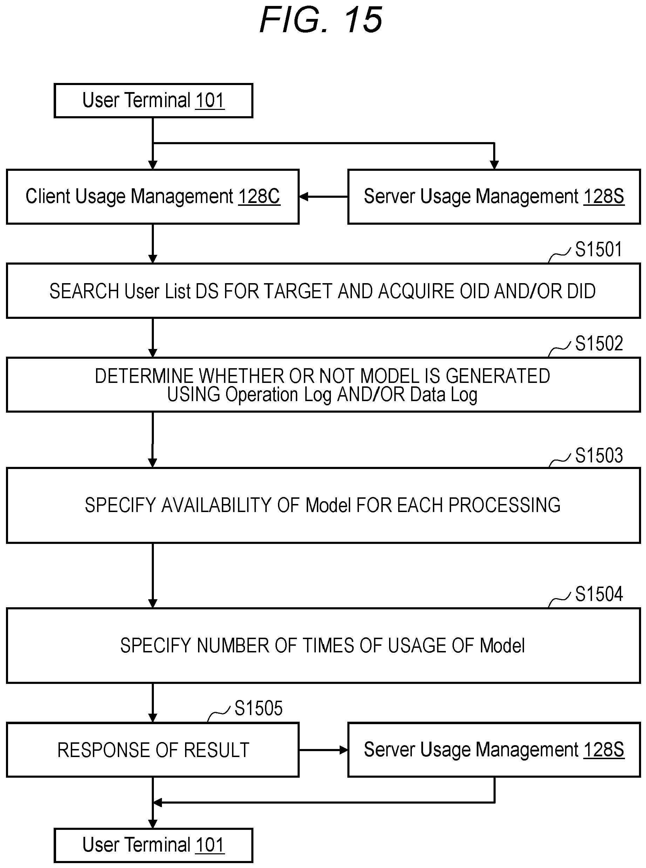

Fig. 15 illustrates a flow of usage management processing.

The client usage management 128C receives a usage management request from the user terminal 101 via or not via the server usage management 128S, and performs processing in and after S1501 in response to the request.

In S1501, the client usage management 128C searches the user list DS 132 for a target, and acquires a target ID that is an OID and/or a DID of the found target. The "target" referred to in this paragraph may be an element that satisfies a condition designated by the request from the user terminal 101. For example, when "Ellen" is hit as "target", the target ID is "OID-004" (see Fig. 7). Note that although a range of the target search is Inclusion Users 705, Exclusion Users 706 may be adopted instead of Inclusion Users 705 as the range of the target search. The same applies to S1601 and/or S2001 instead of or in addition to S1501.

In S1502, the client usage management 128C specifies whether a model is generated using the target log or not. In this paragraph, the "target log" is a log (operation log 32 and/or data log 31) corresponding to the target ID acquired in S1501. In S1502, for example, by searching the log DS 142C for a plurality of operation logs 32 using "OID-004" as a key, it is possible to specify that the model of "MID-001" is generated (see Fig. 5).

In S1503, the client usage management 128C specifies availability of the model using the target log (on the basis of the usage 510 or 609 of the target log). In addition, the client usage management 128C specifies how the provided data has been processed to generate the model, and specifies availability of the model for each processing of the data (e.g., for each of Training, Validation, and Evaluation). For example, the client usage management 128C specifies "OID-003" to "OID-005" corresponding to "MID-001", and specifies availability on the basis of the usage 510 of the operation log 32 with each of "OID-003" to "OID-005".

In S1504, the client usage management 128C specifies the number of times of usage of the model using the target log. For example, the client usage management 128C may specify, as the number of times of inference, the number of operation logs 32 having the Type 505 "Inference" corresponding to "MID-001", or specify the number of times of model provision, or specify the number of times of inference, the number of times of provision, or a sum thereof as the number of times of usage.

In a case where S1504 ends, the usage data illustrated in Fig. 11A is completed for the model specified in S1502 (or an application to which the model belongs). In other words, the Date 1102 may be the execution date and time of this usage management processing, the Application/Model ID 1103 may be the ID of the model (or the application), and the Start Date 1104 and the End Date 1105 may be set from the Date 504 or 603 of a log for the model (or application) regarding the target found in S1501. The information 1107 to 1114 may be set in S1503. The Usage Counts 1115 may be the number of times of usage specified in S1504.

In S1505, the client usage management 128C returns the result (the completed usage data) to the user terminal 101 that is a request source of the usage management via or not via the server usage management 128S. In addition, the client usage management 128C includes the result (the completed usage data) in the usage DS 134C.

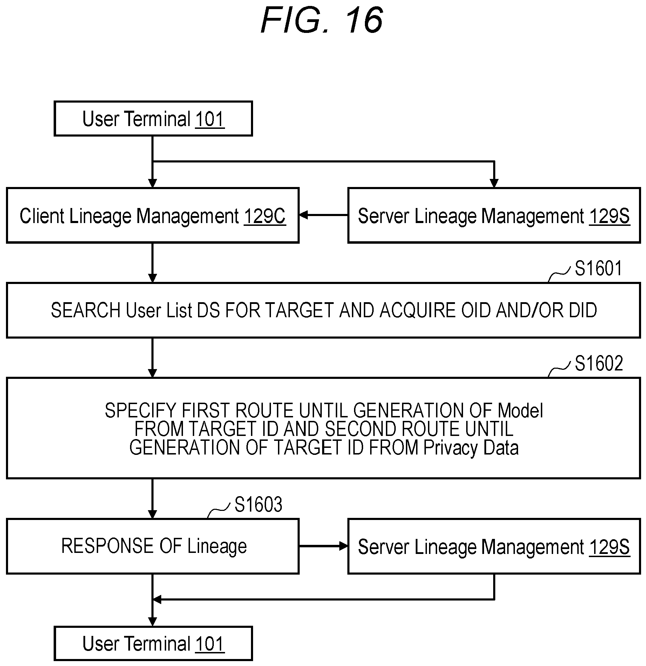

Fig. 16 illustrates a flow of lineage management processing.

The client lineage management 129C receives a lineage management request from the user terminal 101 via or not via the server lineage management 129S, and performs processing in and after S1601 in response to the request.

In S1601, the client lineage management 129C searches the user list DS 132 for a target, and acquires a target ID that is OID and/or DID of the found target. The "target" referred to in this paragraph may be an element (e.g., "Ellen") that satisfies the condition designated by the request from the user terminal 101. Note that since the target ID of the target can be present in the plurality of user lists 33, a plurality of target IDs of the target can be acquired. In this case, S1602 and subsequent steps are performed for each of the plurality of target IDs.

In S1602, using the target log, the client lineage management 129C acquires a first route (usage history) until generation of a model from the target ID found in S1601 and a second route until generation of the target ID from the privacy data. In other words, bidirectional search (route search) with the target ID as a starting point is performed. The first route is a route from the target ID to a downstream side, and the second route is a route from an upstream side to the target ID. In this paragraph, the "target log" is a log (operation log 32 and/or data log 31) corresponding to the target ID acquired in S1601. For example, in Fig. 12A, in a case where the target ID is "OID-002", a first route from the target ID to "MID-101", "MID-001", and "MID-027" and a second route from the privacy data ("AID-123") to "OID-002" are specified. A combination of the first route and the second route becomes a lineage.

Specifying the first route is, for example, as follows.
(a1) The client lineage management 129C specifies DID of the data log 31 having, as the Data 606, the ID in the Target 508 in the operation log 32 having OID. (In a case where the target ID is OID, (a1) is the start of the route specification.)
(a2) The client lineage management 129C determines whether or not the Type 604 of the data log 31 having DID is "Model" (an example of a first predetermined value). (In a case where the target ID is DID, (a2) is the start of specification of the first route. In the case where (a2) is the processing after (a1), DID is the DID specified in (a1) .)
(a3) In a case where the determination result of (a2) is false, the client lineage management 129C specifies OID of the operation log 32 having the Source 507 including DID in (a2). Thereafter, the processing returns to (a1).

Specifying the second route is as follows, for example.
(b1) The client lineage management 129C specifies DID of the data log 31 having, as the Data 606, ID in the Source 507 in the operation log 32 having OID. (In a case where the target ID is OID, (b1) is the start of specification of the second route.)
(b2) The client lineage management 129C determines whether or not the Type 604 of the data log 31 having DID is "Privacy" (an example of a second predetermined value). (In a case where the target ID is DID, (b2) is the start of specification of the second route. In a case where (b2) is the processing after (b1), DID is the DID specified in (b1) .
(b3) In a case where the determination result of (b2) is false, the client lineage management 129C specifies OID of the operation log 32 having the Source 507 including DID in (b2). Thereafter, the processing returns to (b1).

In S1603, the client lineage management 129C returns the result (lineage data indicating the lineage specified in S1602) to the user terminal 101 that is a request source of the lineage management via or not via the server lineage management 129S. Furthermore, the client lineage management 129C includes the result (the lineage data) in the lineage DS 137C.

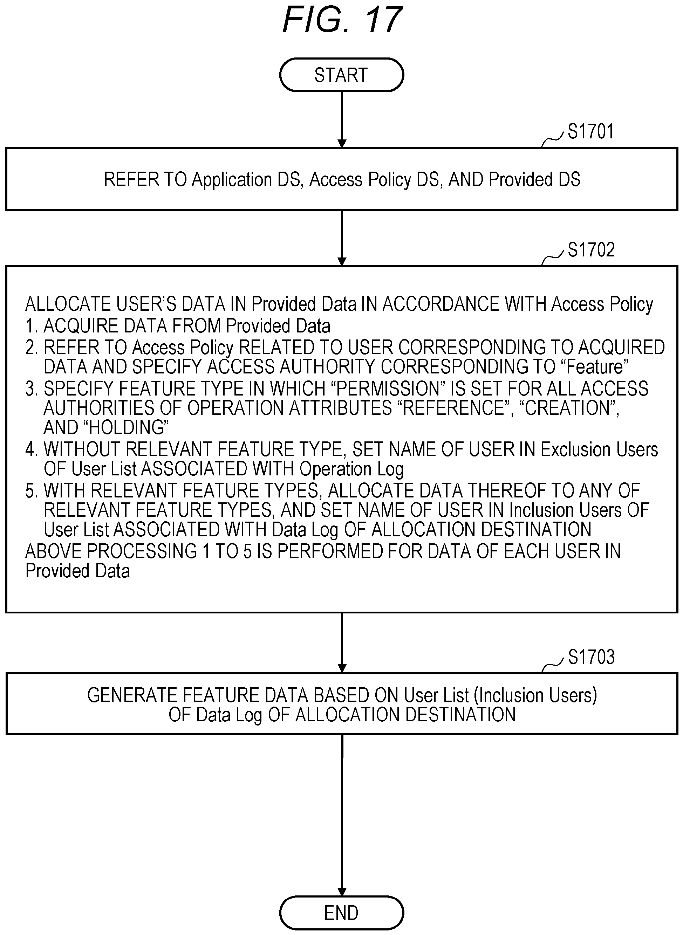

Fig. 17 illustrates a flow of the data processing.

In S1701, the data preprocessing 126 refers to the application DS 136C, the access policy DS 133C, and the provided DS 135 through the machine learning control 123.

In S1702, the data preprocessing 126 allocates user's data in provided data corresponding to an application specified from the application DS 133C in accordance with the access policy DS 136C. Specifically, the processing is as follows, for example.

(S1702-1) The data preprocessing 126 acquires user's data from the provided data.

(S1702-2) The data preprocessing 126 refers to an access policy related to a user corresponding to the data acquired in S1702-1, and specifies an access authority corresponding to "Feature".

(S1702-3) The data preprocessing 126 acquires a feature type (examples: Training, Validation, or Evaluation) in which "permission" is set for all of the operation attributes "reference", "creation", and "holding". In other words, when even one of the operation attributes "reference"," creation", and "holding" has "prohibition", the data of the user cannot be used for model creation, and thus the data preprocessing 126 performs the next S1702-4.

(S1702-4) If there is no relevant feature type, the data cannot be used for the feature data. Therefore, the data preprocessing 126 sets the name of the user in the Exclusion Users 705 of the user list 33 associated with the operation log 32.

(S1702-5), if there are relevant feature types, the data preprocessing 126 allocates the data thereof to any of the relevant feature types, and sets the name of the user in the Inclusion Users 706 of the user list 33 associated with the data log 31 of the allocation destination (the data log 31 corresponding to the feature data of the feature type).

In S1702, S1702-1 to S1702-5 are performed for data of all users in the provided data.

In S1703, the data preprocessing 126 generates feature data on the basis of data of the user specified from the Inclusion Users 706 in the user list 33 of the data log 31 of the allocation destination among the provided data, and includes the feature data in the feature DS 138.

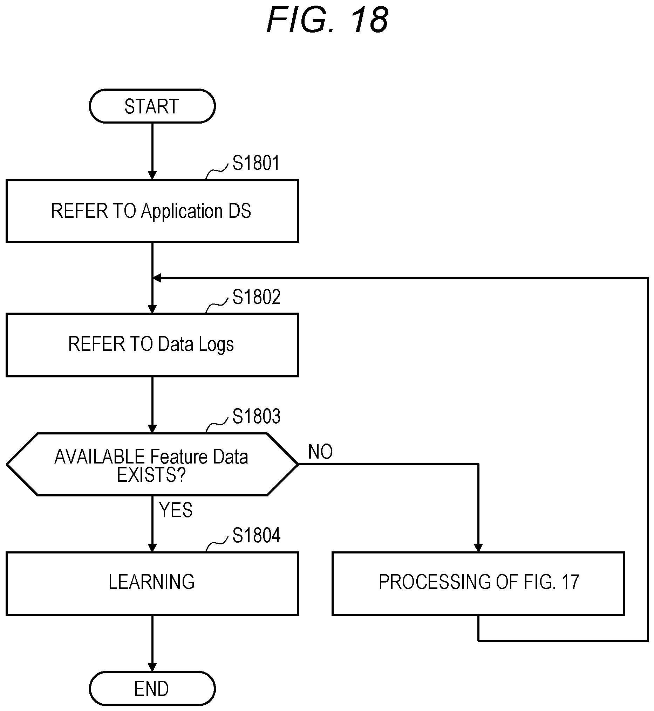

Fig. 18 illustrates a flow of learning processing.

In S1801, the learning 125 refers to the application DS 136C through the machine learning control 123.

In S1802, the learning 125 refers to the plurality of data logs 31.

In S1803, the learning 125 determines whether or not the target data log 31 exists in the plurality of data logs 31. The target data log 31 is a data log 31 that corresponds to an application specified from the application DS 136C, and has the Type 604 of "Feature" and the usage 510 of "Approve". The determination in S1803 is determination of presence or absence of available feature data.

When the determination result in S1803 is true (S1803: Yes), in S1804, the learning 125 performs model learning (Training, Validation or Evaluation) using the feature data.

When the determination result of S1803 is true (S1803: No), the data preprocessing 126 performs the processing illustrated in Fig. 17. Thereafter, the processing returns to S1802.

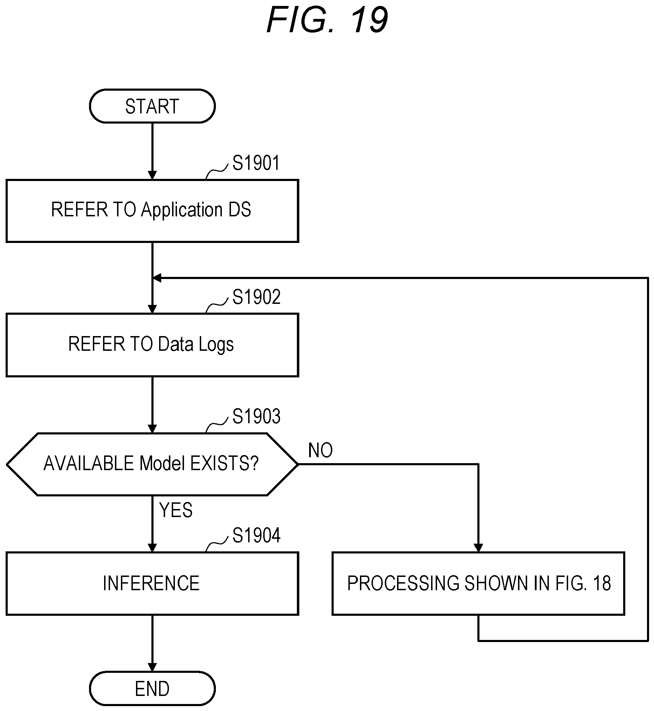

Fig. 19 illustrates a flow of the inference processing.

In S1901, the inference 127 refers to the application DS 136C through the machine learning control 123.

In S1902, the inference 127 refers to the plurality of data logs 31.

In S1903, the inference 127 determines whether or not the target data log 31 exists in the plurality of data logs 31. The target data log 31 is a data log 31 that corresponds to an application specified from the application DS 136C, and has the Type 604 of "Model" and the usage 510 of "Approve". The determination in S1903 is determination of presence or absence of an available model.

When the determination result in S1903 is true (S1903: Yes), the inference 127 performs inference using the model in S1904.

When the determination result of S1903 is true (S1903: No), in S1905, the learning 125 performs the processing illustrated in Fig. 18. Thereafter, the processing returns to S1902.

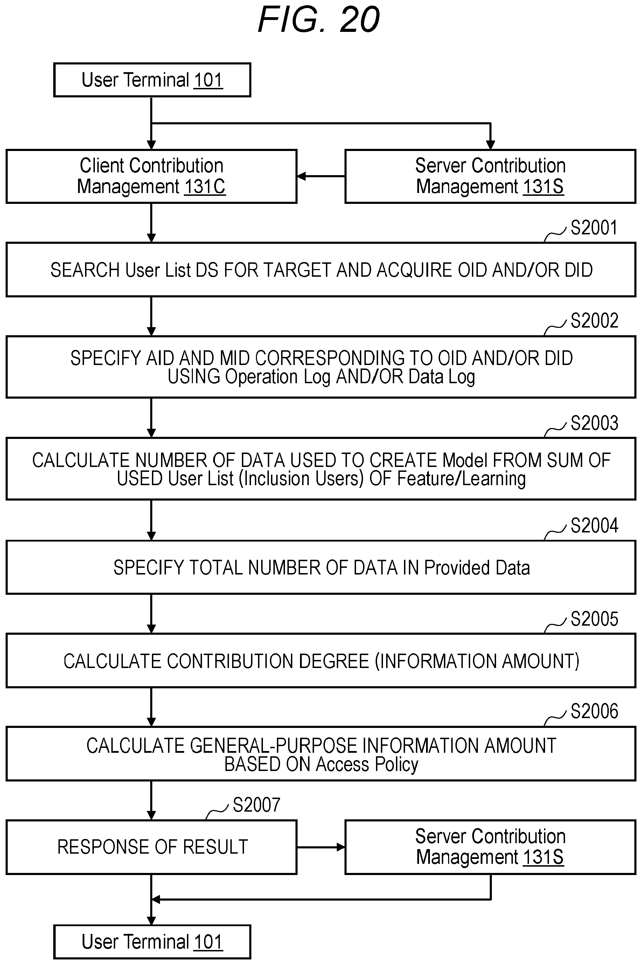

Fig. 20 illustrates a flow of contribution management processing.

The client contribution management 131C receives a contribution management request from the user terminal 101 via or not via the server contribution management 131S, and performs the processing in and after S2001 in response to the request.

In S2001, the client contribution management 131C searches the user list DS 132 for a target to acquire a target ID that is OID and/or DID of the found target. The "target" referred to in this paragraph may be an element that satisfies a condition designated by the request from the user terminal 101.

In S2002, the client contribution management 131C specifies AID and MID corresponding to the target ID using a target log. The "target log" is a log (operation log 32 and/or data log 31) corresponding to the target ID acquired in S2001.

In S2003, the client contribution management 131C calculates the number of data used to create a model corresponding to AID and MID specified in S2002. The number of data to be calculated is a sum of the number of users represented by the Inclusion Users 706 of the user list 33 corresponding to the data log 31 having the Type 604 "Feature" and the number of users represented by the Inclusion Users 706 of the user list 33 corresponding to the operation log 32 having the Type 505 "Learning".

In S2004, the client contribution management 131C specifies the total number of data related to the provided data specified (how many pieces of user data are included in the provided data) using the target ID as a key.

In S2005, the client contribution management 131C calculates an information amount (= -log₂ (the number of available data/the total number of data). The "number of available data" is the number of data calculated in S2003. The "total number of data" is the number of data specified in S2004.

In S2006, the client contribution management 131C calculates a general-purpose information amount on the basis of an access policy (e.g., the access policy of the user as the target specified in S2001) and the information amount calculated in S2005.

When S2006 ends, the contribution data illustrated in Fig. 13A is completed. Specifically, the AID 1302 and the MID 1303 may be the AID and the MID specified in S2002, the information amount 1304 may be the information amount calculated in S2005, the general-purpose information amount 1305 may be the general-purpose information amount calculated in S2006, the number of available data 1306 may be the number of data calculated in S2003, and the total number of data 1307 may be the number of data specified in S2004.

In S2007, the client contribution management 131C returns the result (the completed contribution data) to the user terminal 101 that is a request source of the contribution management via or not via the server contribution management 131S. In addition, the client contribution management 131C includes the result (the contribution data) in the contribution DS 140C.

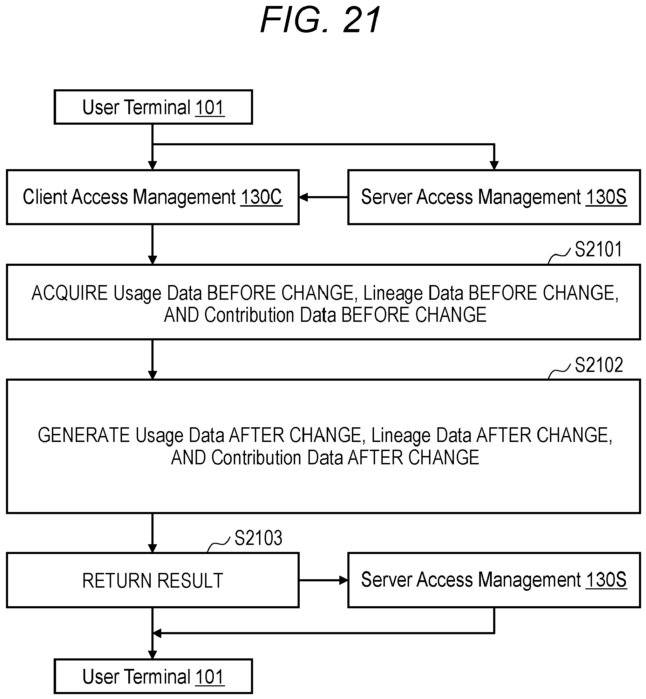

Fig. 21 illustrates a flow of first access management processing.

The client access management 130C receives a first access management request from the user terminal 101 via or not via the server access management 130S, and performs processing in and after S2101 in response to the request. The first access management request is a request for influence examination accompanying a change of an access authority (influence examination in a case where it is assumed that an access authority designated in this request is changed). In the first access management request, for example, a user corresponding to the access policy 910 whose access authority is to be changed and how an access authority corresponding to which data type and operation type is to be changed (e.g., the access policy 910 after the access authority is changed) may be designated. Note that in the description of Fig. 21 (and Fig. 22), "before change" means before change of an access authority in an access policy, and "after change" means after change of the access authority in the access policy.

In S2101, the client access management 130C acquires usage data before the change from the usage DS 134C (or the client usage management 128C). In addition, the client access management 130C acquires lineage data before the change from the lineage DS 137C (or the client lineage management 129C). In addition, the client access management 130C acquires contribution data before the change from the contribution DS 140C (or the client contribution management 131C). The data before the change acquired in S2101 may be data in the DS 134C, 137C, or 140C at the start of the first access management processing.

In S2102, the client access management 130C generates usage data after the change on the basis of the usage data before the change acquired in S2101. Specifically, for example, regarding the access policy 910 of a user to be permitted (a user represented by the user list 33 (Inclusion Users 706) associated with the log 32 and/or 31 corresponding to the Application/Model ID 1103 of the usage data), the client access management 130C determines a value to be subtracted from the information 1107 to 1110 in the Available Models and a value to be added to the information 1111 to 1114 in the Unavailable Models on the basis of a data type ("Privacy", "Provided", "Feature (Training)", "Feature (Validation)", "Feature (Evaluation)", "Model (Training)", "Model (Validation)", or "Model (Evaluation)") of an access authority changed from "permission" to "prohibition" and an operation type ("reference", "creation" or "holding"). In addition, for example, regarding the access policy 910 of a user to be prohibited (a user represented by the user list 33 (Inclusion Users 706) associated with the log 32 and/or 31 corresponding to the Application/Model ID 1103 of the usage data), the client access management 130C determines a value to be added to the information 1107 to 1110 in the Available Models and a value to be subtracted from the information 1111 to 1114 in the Unavailable Models on the basis of a data type and an operation type of an access authority changed from "prohibition" to "permission". Note that both a user to be permitted and a use to be prohibited may be a single user.

In addition, the client access management 130C generates lineage data after the change on the basis of the lineage data before the change acquired in S2101. Specifically, for example, regarding the access policy 910 of the user to be permitted, DID corresponding to the data whose usage is approved is set as DID corresponding to the data whose usage is disapproved on the basis of the data type and the operation type of the access authority changed from "permission" to" prohibition". In addition, for example, regarding the access policy 910 of the user to be prohibited, the client access management 130C sets DID corresponding to the data whose usage is disapproved as DID corresponding to the data whose usage is approved on the basis of the data type and the operation type of the access authority changed from "prohibition" to "permission".

In addition, the client access management 130C generates contribution data after the change on the basis of the contribution data before the change acquired in S2101. Specifically, for example, regarding the access policy 910 of the user to be permitted, the general-purpose information amount 1305 is changed on the basis of the data type and the operation type of the access authority changed from "permission" to "prohibition". Furthermore, for example, regarding the access policy 910 of the user to be prohibited, the client access management 130C changes the general-purpose information amount 1305 on the basis of the data type and the operation type of the access authority changed from "prohibition" to "permission".

In S2103, the client access management 130C returns the result (at least the latter data among the usage data, the lineage data, and the contribution data before the change, and the usage data, the lineage data, and the contribution data after the change) to the user terminal 101 that is a request source of the first access management via or not via the server access management 130S.

Fig. 22 illustrates a flow of second access management processing.

The client access management 130C receives a second access management request from the user terminal 101 via or not via the server access management 130S, and performs processing in and after S2201 in response to the request. The second access management request is a request for changing an access authority. In the second access management request, for example, a user corresponding to the access policy 910 whose access authority is to be changed, and how an access authority corresponding to which data type and operation type is to be changed (e.g., the access policy 910 after the access authority is changed) may be designated.

In S2201, the client access management 130C performs S2101 and S2102 in Fig. 21, and returns the result and an inquiry (inquiry as to whether or not to change an access authority as requested) to the user terminal 101 that is a request source of the second access management via or not via the server access management 130S.

In S2202, the client access management 130C determines whether or not an answer (answer from the user) to the inquiry is an answer that the access authority is to be changed. Note that in S2201, there may be no inquiry to the user terminal 101. In this case, the determination in S2202 may be a determination as to whether or not the result obtained in S2201 satisfies a predetermined condition. The condition may be different for each user, and the predetermined condition compared with the result in S2202 may be a condition corresponding to the user designated in the second access management request. Furthermore, the predetermined condition may include a condition regarding information that may be affected by the access authority change among the usage data, the lineage data, and the contribution data, for example, at least one of a condition regarding the information 1107 to 1110 of Available Models, a condition regarding the information 1111 to 1114 of Unavailable Models, a condition regarding a node (e.g., DID) in the lineage (e.g., a condition regarding the number of decreased or increased DIDs), and a condition regarding a general-purpose information amount (e.g., a condition regarding an increased amount or decreased amount of the general-purpose information amount). Furthermore, the predetermined condition may include a condition regarding whether or not operation or data (e.g., feature data or model data) can be reproduced.

When the determination result in S2202 is false (S2202: No), in S2208, the client access management 130C returns the result (the result that the access authority is not changed) to the user terminal 101 that is the request source of the second access management via or not via the server access management 130S.

When the determination result in S2202 is true (S2202: Yes), the client access management 130C determines in S2203 whether or not an influence of the change in the access authority is relevant to a promotion condition. Specifically, for example, the promotion DS 143C includes promotion condition data for each element such as a user or an application. The promotion condition data represents an ID of the element, a content of the promotion, and a trigger of the promotion (a condition for presenting the promotion to the user (in other words, a condition regarding an influence of the change in the access authority)). According to the promotion condition data illustrated in Fig. 22, the number of data for providing the application of "AID-123" becoming less than 80 means that a promotion, which is a product of a general-purpose contribution degree and one dollar, is presented to the user whose access authority is to be changed. In S2203, for example, the client access management 130C specifies promotion condition data from the promotion DS 143C using, as a key, "AID-123" corresponding to a top node (DID) of the graph represented by the lineage data after the change (alternatively, an ID (e.g., name) of the user whose access authority is to be changed). The client access management 130C determines whether or not the number of data specified in S2201 (the number of data for providing the application of "AID-123") is relevant to a promotion trigger. When the determination result of S2203 is false (S2203: No), the processing proceeds to S2206.

When the determination result in S2203 is true (S2203: Yes), the client access management 130C presents the promotion to the user (the user terminal 101) in S2204. The promotion is displayed on the user terminal 101. In the presentation of S2204, the client access management 130C notifies the user that the user can receive the presented promotion on condition that the access authority is relaxed (modifying a desired access authority change to increase the number of data available to the user) or that the desired access authority change is canceled.

In S2205, the client access management 130C determines whether or not an answer (answer from the user) to the promotion presentation is an access authority change as desired (as requested). When the determination result in S2205 is false (S2205: No), in S2208, the client access management 130C returns the result (the result that the access authority is not changed) to the user terminal 101 that is the request source of the second access management via or not via the server access management 130S. In a case of relaxation of the access authority, the second access management request for changing the access authority indicating an access authority after the relaxation may be transmitted from the user terminal 101, and processing illustrated in Fig. 22 may be performed on the second access management request.

When the determination result in S2205 is true (S2205: Yes), in S2206, the client access management 130C updates the usage 510 and/or the reproduction 511 of the operation log 32, and/or the usage 609 and/or the reproduction 610 of the data log 31 as the access authority changes. Specifically, for example, the usage 609 "Disapprove" or the reproduction 610 "Impossible" of the data log 31 depends on the access authority "prohibition" or the like of the operation attribute "reference", "creation", or "holding". Furthermore, the reproduction 511 "Possible" of the operation log 32 may be a case of the usage 609 "Approve" of the data log 31 corresponding to the Source 507 of the operation log 32 and a case of the reproduction 610 "Possible" of the data log 31 corresponding to the Target 508 of the operation log 32. The usage 510 "Disapprove" of the operation log 32 is a case where the application becomes unavailable, and the access authority may not affect availability of the application.

In S2207, the client access management 130C updates at least one DS among the provided DS 135, the feature DS 138, the model DS 141C, and the like as the access authority changes. For example, when the access authority is to change "prohibition" of the operation attribute to "holding", the client access management 130C deletes data of a user whose access authority has been changed or data using such data from at least one DS among the provided DS 135, the feature DS 138, the model DS 141C, and the like. In a case where data of the user can be specified, the client access management 130C newly creates or duplicates a data log 31 corresponding to data including the user data to be deleted, records the name of the user whose access authority is to be changed in Exclusion Users 705 of the user list 33 to be associated with the data log 31, and updates the Version 704. When the data using the user data to be deleted is feature data, it is difficult to specify the user data, and thus the client access management 130C deletes the feature data itself.

In S2208 after S2207, the client access management 130C returns the result to the user terminal 101 as the request source of the second access management via or not via the server access management 130S.

In the flow illustrated in Fig. 22, for example, S2203 to S2205 may be omitted.

According to the above-described embodiment, when unavailable data is generated or has been generated due to access authority change (change from "permission" to "prohibition") such as opt-out application or withdrawal of federated learning, it is possible to specify and display a model that can be reproduced, can be used or cannot be used. In addition, it is possible to specify and display a lineage as a usage route of privacy data. In addition, in order to provide access authority change such as appropriate opt-out application, it is possible to set a usage range of privacy data with a fine granularity (e.g., a method of sorting Training, Validation, and Evaluation).

Note that, for example, in S2201, the client access management 130C may check whether or not the values of the reproductions 511 and 610 change on the basis of the data before the change and the data after the change, and present the checked result to the user. For example, the user can determine whether or not an access authority is executed, for example, "the access authority is not changed if reproduction is impossible" or "the access authority is changed if a range in which the reproduction is impossible is a presented range." The determination result may be an answer (an answer to an inquiry) received by the client access management 130C.

Although one embodiment has been described in the foregoing, this is an example for describing the present invention, and it is not intended to limit the scope of the present invention only to this embodiment. For example, anonymized privacy data may be adopted instead of privacy data (e.g., a correspondence table between original privacy data and anonymization or processing (hash function or the like) may be used).

The above description can be summarized as follows, for example. The following summarization may include supplementary description of the above description, and description of modifications.

The storage apparatus (e.g., the storage apparatus 120) and the processor (e.g., the processor 160) are provided. The storage apparatus stores an access policy (e.g., the access policy DS 133 (e.g., 133C)) for each entity. For each entity, the access policy includes, with respect to each of one or a plurality of operation attributes, an access authority for each n-th order data for use in an application or a model with respect to the entity (n is an integer of 0 or more). Although in the above-described embodiment, the model is a model generated by machine learning, it may be a model generated by a method other than machine learning (e.g., statistical information generated by a statistical method). The "statistical information" mentioned here may be a model as a program or data. In addition, "n-th order data" may be referred to as a data type, and the value of "n" may be incremented every time data is used (including, e.g., processing), such as zero-th order data (e.g., raw data such as privacy data), primary data (e.g., provided data), secondary data (e.g., feature data), tertiary data (e.g., model data), and the like.

The storage apparatus stores, for each operation, an operation log (e.g. the operation log 32) that is a log of the operation, a data log (e.g. the data log 31 corresponding to the Source 507) that is a data log corresponding to source data as data for the operation and is associated with the operation log, and/or a data log (e.g. the data log 31 corresponding to the Target 508) that is a data log corresponding to target data as data as a result of the operation and is associated with the operation log.

The storage apparatus stores an entity list (e.g., the user list 33) based on the access policy with respect to an operation log and/or a data log. Each entity list includes an inclusion list (e.g., the Inclusion Users 706) that is a list of entities permitted to use data for operation or data corresponding to a log (e.g., the log 32 or 31) associated with the entity list, and/or an exclusion list (e.g., the Exclusion Users 705) that is a list of entities prohibited to use data for operation or data corresponding to a log (e.g., the log 32 or 31) associated with the entity list. Although the "entity" here is a user in the above-described embodiment, it may be an entity (e.g., a right such as a copyright) other than the user. The data of the entity may be data that is not preferable to be used without permission of a specific person (e.g., a user, a right holder, or an agent), such as privacy data and security data, and the entity may be the specific person. Furthermore, the entity is not limited to a person, and may be any tangible object or intangible object.

In response to a request, when one or more entity lists in which an entity specified on the basis of the request is recorded are found from a plurality of the entity lists, the processor specifies a usage condition on the basis of one or more operation logs and one or more data logs specified using the one or more entity lists, and returns data indicating the specified usage condition to a request source.

This makes it possible to provide transparent data management while maintaining a data access authority.

Note that any of the operation log, the data log, and the entity list may be generated and stored by the processor. For example, the processor may specify a data log corresponding to input data (source data) every time operation involving input and output of data is performed, generate an operation log of the operation and a data log (data log associated with the operation log) corresponding to output data (target data) on the basis of the specified data log, and store these logs in the storage apparatus. In addition, the processor may perform operation on the basis of an access policy of each entity, and thus, in input data (e.g., m-th order data), the processor may input (use) data of an entity for which an access authority for the input data is permitted and may output the data as a result of the operation. For an operation log and a data log of the output data, the processor may generate an entity list in which an entity having data used is included in the inclusion list (alternatively, an entity having data not used is included in the exclusion list), and associate the generated entity list with the operation log and the data log. The entity list may exist for each operation log and for each data log.

The "usage condition" may be a lineage specified on the basis of specified one or more operation logs and one or more data logs. The lineage may be a directed acyclic graph (DAG) in which data or operation is a node, and a model corresponds to an intermediate node or a leaf node. As a result, a person who has received provision of a usage condition from the data management system can grasp how data has been used.

The "usage condition" may include a contribution degree of a specified entity. The "contribution degree " may include a value calculated on the basis of the total number of data and the number of available data (e.g., the information amount 1304 and/or the general-purpose information amount 1305). The total number of data (e.g., the total number of data 1307) may be the number of data in (m-k)-th order data that can be used to generate a model as m-th order data (both m and k are integers less than or equal to a maximum value of n, and m is greater than k). Of the total number of data, the number of available data (e.g., the number of available data 1306) may be the number of data corresponding to entities for which an access authority is permitted up to the m-th order data in an access policy. As a result, a person who has received provision of a usage condition from the data management system can grasp how much the data of the entity contributes to a model (or to an application to which the model belongs). Note that for the model as the m-th order data, the access policy may include an access authority for each of a plurality of types of models, and a calculated value (e.g., the general-purpose information amount 1305 included in the contribution degree) may be based on the total number of data and the number of available data, and on the number of predetermined types of models for which an access authority is permitted among a plurality of types of the models.

With respect to the model as the m-th order data, the access policy may include an access authority for each of the plurality of types of models, and the "usage condition" may include the number of models for each type of model generated using data of the specified entity. As a result, a person who has received provision of a usage condition from the data management system can grasp for what type of model the data of the entity has been used.

The "usage condition" may include a usage condition before an access authority in an access policy of the specified entity is changed and a usage condition after the change. As a result, a person who has received provision of a usage condition from the data management system can grasp an influence range of a change in an access authority.

At least one of an operation log and a data log associated with the operation log may include reproducibility information that is information indicating reproducibility of data provided as a result of the operation. With respect to reproducibility information that the specified one or more operation logs and one or more data logs have, the "usage condition" may include reproducibility indicated by reproducibility information after an access authority changes. As a result, a person who has received provision of a usage condition from the data management system can grasp data reproducibility after a change in an access authority.

In a case where a usage condition after an access authority is changed satisfies a predetermined condition (e.g., Promotion Trigger), the processor may present promotion of relaxation or change cancellation of the access authority to the request source. As a result, it is possible to give an incentive to the request source to relax the access authority or cancel the change, thereby promoting usage of the data.

The data management system may include a plurality of client computers including a client computer having the processor and the storage apparatus, and a server computer that communicates with the plurality of client computers. The server computer may generate a model by federated learning using machine learning models from the plurality of client computers and transmit the generated model to the plurality of client computers. The server computer may also store an operation log and a data log related to operation performed by the server computer. An operation list (e.g., the operation list 34) may be associated with the operation log and the data log in the server computer instead of the entity list. The operation list includes an inclusion list that is a list of operation or data corresponding to an entity permitted to use data for operation or data corresponding to a log associated with the operation list, and/or an exclusion list that is a list of operation or data corresponding to an entity prohibited to use data for operation or data corresponding to a log associated with the operation list. As described above, instead of the entity list, the server computer stores an operation list that does not include information enabling an entity to be specified.

## Claims

1. A data management system comprising a storage apparatus and a processor, wherein
the storage apparatus stores an access policy for each entity,
for each entity, the access policy includes, with respect to each of one or a plurality of operation attributes, an access authority for each n-th order data for use in an application or a model with respect to the entity (n is an integer of 0 or more),
the storage apparatus stores, for each operation,
an operation log that is a log of the operation,
a data log that is a data log corresponding to source data as data for the operation and is associated with the operation log, and/or a data log that is a data log corresponding to target data as data as a result of the operation and is associated with the operation log,
the storage apparatus stores an entity list based on the access policy with respect to an operation log and/or a data log,
each entity list includes an inclusion list that is a list of entities permitted to use data for operation or data corresponding to a log associated with the entity list, and/or an exclusion list that is a list of entities prohibited to use data for operation or data corresponding to a log associated with the entity list, and
the processor
in response to a request, when one or more entity lists in which an entity specified based on the request is recorded are found from a plurality of the entity lists, specifies a usage condition based on one or more operation logs and one or more data logs specified using the one or more entity lists, and
returns data indicating the specified usage condition to a request source of the request.

2. The data management system according to claim 1,
wherein
the usage condition is a lineage specified on the basis of the specified one or more operation logs and one or more data logs, and
the lineage is a directed acyclic graph (DAG) in which data or operation is a node, and a model corresponds to an intermediate node or a leaf node.

3. The data management system according to claim 1,
wherein
the usage condition includes a contribution degree of the specified entity,
the contribution degree includes a value calculated based on a total number of data and a number of available data,
the total number of data is a number of data in (m-k)-th order data that can be used to generate a model as m-th order data (both m and k are integers less than or equal to a maximum value of n, and m is greater than k), and
of the total number of data, the number of available data is a number of data corresponding to entities for which an access authority is permitted up to the m-th order data in an access policy.

4. The data management system according to claim 3,
wherein
with respect to the model as the m-th order data, the access policy includes an access authority for each of a plurality of types of models, and
the calculated value is based on the total number of data and the number of available data, and a number of predetermined types of models for which an access authority is permitted among the plurality of types of models.

5. The data management system according to claim 1,
wherein
with respect to a model as m-th order data, the access policy includes an access authority for each of a plurality of types of models, and
the usage condition includes a number of models for each type of model generated using data of the specified entity.

6. The data management system according to claim 1, wherein the usage condition includes a usage condition before an access authority in an access policy of the specified entity is changed and a usage condition after the change.

7. The data management system according to claim 1,
wherein
at least one of an operation log and a data log associated with the operation log includes reproducibility information that is information indicating reproducibility of data, and
with respect to the reproducibility information that the specified one or more operation logs and one or more data logs have, the usage condition includes reproducibility indicated by reproducibility information after an access authority changes.

8. The data management system according to claim 1, wherein in a case where a usage condition after an access authority is changed satisfies a predetermined condition, the processor presents promotion of relaxation or change cancellation of the access authority to the request source.

9. The data management system according to claim 1, wherein the entity list exists for each operation log and for each data log.

10. The data management system according to claim 1, comprising:
a plurality of client computers including a client computer having the processor and the storage apparatus; and
a server computer that communicates with the plurality of client computers, wherein
the server computer generates a model by federated learning using machine learning models from the plurality of client computers and transmits the generated model to the plurality of client computers,
also in the server computer, an operation log and a data log related to operation performed by the server computer are stored,
an operation list is associated with the operation log and the data log in the server computer instead of the entity list, and
the operation list includes an inclusion list that is a list of operation or data corresponding to an entity permitted to use data for operation or data corresponding to a log associated with the operation list, and/or an exclusion list that is a list of operation or data corresponding to an entity prohibited to use data for operation or data corresponding to a log associated with the operation list.

11. A data management method, comprising:
specifying, in response to a request, a usage condition based on one or more operation logs and one or more data logs specified using the one or more entity lists by a computer when one or more entity lists in which an entity specified based on the request is recorded are found from a plurality of entity lists,
for each entity, an access policy includes, with respect to each of one or a plurality of operation attributes, an access authority for each n-th order data for use in an application or a model with respect to the entity (n is an integer of 0 or more),
for each operation, there are provided
an operation log that is a log of the operation, and
a data log that is a data log corresponding to source data as data for the operation and is associated with the operation log, and/or a data log that is a data log corresponding to target data as data as a result of the operation and is associated with the operation log,
with respect to the operation log and/or the data log, an entity list based on the access policy is provided,
each entity list includes an inclusion list that is a list of entities permitted to use data for operation or data corresponding to a log associated with the entity list, and/or an exclusion list that is a list of entities prohibited to use data for operation or data corresponding to a log associated with the entity list, and
returning data indicating the specified usage condition to a request source of the request by the computer.
